# DEMANDE DE BREVET EUROPEEN

(11) **EP 1 783 107 A1**
(43) Date de publication de la demande: **09.05.2007**
(21) Numéro de dépôt: 05300904.9
(22) Date de dépôt: 08.11.2005
(51) Int. Cl.: C04B 37/02, H01M 8/12, C03C 8/24, C03C 8/14, B01J 19/24

(54) **Procédé d'élaboration d'un scellement haute température céramique/métal, composition en céramique et verre et ensemble de jonction céramique-métal**

(71) Demandeur: L'AIR LIQUIDE, Société Anonyme pour l'Etude et l'Exploitation des Procédés Georges Claude, 75321 Paris Cedex 07 (FR)
(72) Inventeur: Richet, Nicolas, 78330, Fontenay-Le-Fleury (FR); Del Gallo, Pascal, 91410, Dourdan (FR); Trebuchaire, Laetitia, 87000, Limoges (FR); Chaput, Christophe, 87410, Le Palais-sur-Vienne (FR)
(74) Mandataire: Conan, Philippe Claude

(57) **Abrégé**

Procédé de fabrication d'une jonction entre une pièce en céramique et une pièce métallique, avec un matériau de scellement constitué pour 100 % de sa masse de 10 % à 90 % d'un verre ou d'un mélange de verre (V), et de 10 % à 90 % d'au moins un matériau céramique (C), comprenant les étapes successives suivantes :
ou bien
- une étape (a) de préparation d'un mélange (M) de poudres, à partir d'une poudre de verre (V) et d'une poudre de matériau céramique (C) ;
- une étape (b) de pressage d'une préforme à partir du mélange de poudres (M);
- une étape (c) de densification de la préforme;
- une étape (d) de mise en place des éléments de la jonction céramique complémentaires à la préforme ; et
- une étape (e) de traitement thermique de mise en place du scellement préparé à l'étape (d) ;

ou bien
- une étape (b) de pressage d'une préforme d'une poudre du matériau céramique (C) ;
- une étape (c) de densification partielle de la préforme ;
- une étape (d) de mise en place des éléments de la jonction céramique - métal complémentaires à la préforme; et
- une étape (e') de traitement thermique d'infiltration du verre dans la porosité de la préforme.

Matériau de scellement mis en oeuvre et ensemble de jonction céramique - métal comportant ledit matériau de scellement.

## Description

L'invention appartient au domaine technologique des jonctions céramiques-métal.

Aujourd'hui, l'essentiel des solutions connues est appliqué à la préparation de piles à combustible à oxyde solide, dénommées SOFC (solid oxide fuel cell en langue anglaise). Ces solutions impliquent l'utilisation soit de verres simples, soit de verres cristallisables soit de mélanges verre - céramique.

Lorsque l'on utilise des verres simples sous forme solide à la température d'utilisation, leurs propriétés physiques, tel leur coefficient d'expansion thermique (CET), doivent s'adapter aux autres éléments de la jonction, notamment les pièces métallique et céramique.

C'est ainsi que R. Zheng et al. ont développé des formulations de type SiO₂-CaO-B₂O₃-Al₂O₃ (Zheng R., Wang S.R., Nie H.W., Wen T.-L. ; J. of Power Sources, vol 128, p 165-172) ;
K. Eicher et al. et R.Lohman et al., des formulations de type BaO-Al₂O₃-SiO₂ (Eichler K., Solow G., Otschick P., Schaffrath W. ; 1999, J. of Eur. Ceram. Soc., vol 19, p 1101-1104 ; Loehman R., Brochu M., Gaunt B., Shah R., Zschiesche D., Dumm H-P ; SECA Core technology program review, 11-14 may 2004) ;
et R. Cassidy, des formulations de type LiO₂-Al₂O₃-SiO₂ (R. Cassidy ; brevet des Etats Unis d'Amérique N° 4,921,738).

Cependant, les verres qui ont la température de ramollissement la plus élevée ont généralement un coefficient de dilatation thermique éloigné de ceux des alliages métalliques, des métaux, et des céramiques. De plus, I.D. Bloom et al. ont montré que les verres de grand coefficient de dilatation thermique contiennent souvent des composés solubles dans l'eau, par exemple l'oxyde de bore B₂O₃ ou l'oxyde de phosphore P₂O₅ (Bloom I.D., Ley K.L. ; 1995, brevet des Etats Unis d'Amérique N° 5,453,331), ce qui accélère leur vitesse d'évaporation dans les atmosphères contenant de la vapeur d'eau. Dans ce même brevet, I.D. Bloom et al. proposent d'utiliser un verre fluide à la température de fonctionnement pour parfaire l'étanchéité du scellement en assurant un contact parfait aux interfaces et ne présentant pas de défauts tels que fissures ou pores.

Cependant, cette technique est limitée en terme de résistance mécanique puisque le matériau de scellement peut s'écouler sous l'effet d'une pression. La composition doit donc être ajustée pour que sa température de ramollissement se situe dans la gamme d'utilisation et que le coefficient de dilatation thermique du verre solide soit proche de ceux des matériaux constituants la jonction, à basse température, afin d'éviter toute fissuration. Or, avec le temps, la cristallisation du verre diminue sa fluidité et modifie ses propriétés. Dans ces conditions, les caractéristiques du cristal formé sont difficiles à contrôler car elles dépendent essentiellement de la composition initiale et du cycle thermique subit par le matériau. Des agents, limitant la cristallisation, peuvent être nécessaires pour maintenir l'état fluide du verre. Si cette approche présente un avantage certain en terme d'étanchéité aux gaz, elle se révèle néanmoins être un handicap en terme de résistance mécanique du matériau à une différence de pression importante. Les deux approches conduites avec un verre seul, qu'il soit solide ou fluide à la température d'utilisation, ne sont donc pas satisfaisantes.

H. McCollister et al. ont montré que le contrôle de la cristallisation du verre permet d'améliorer la résistance chimique et mécanique du matériau de jonction et que les deux paramètres à maîtriser sont dans ce cas, la formulation du verre et le cycle thermique à lui appliquer pour former une phase cristalline possédant les propriétés recherchées. (McCollister H., Reed S.T. ; 1983, brevet des Etats Unis d'Amérique N° 4,414,282). Cette approche a conduit au développement de compositions de type :
LAS (Li₂O-Al₂O₃-SiO₂ ; brevet des Etats Unis d'Amérique N° 4,921,738),
BAS (BaO-Al₂O₃-SiO₂ ; Eichler K., Solow G., Otschick P., Schaffrath W. ; 1999, J. of Eur. Ceram. Soc., vol 19, p 1101-1104 ; K.D.Meinhardt et al., brevet des Etats Unis d'Amérique N° US 6,430,966 B1)
ou BCAS (baryum - calcium - aluminosilicate ; Z. Yang et al. 2003, Solide State Ionics, vol. 160, 213-225).

Ces compositions ont une stabilité accrue par rapport aux verres non cristallisés. Des agents nucléants et/ou un traitement thermique particulier sont utilisés pour favoriser la croissance d'une phase dont le coefficient de dilatation thermique est adapté aux autres éléments de la jonction (Lahl N., Ssingh K., Singheiser L., Hilpert K., Bahadur D. ; 2000, J. Mat. Sci., vol 35, p. 3089-3096 ; Loehman R., Brochu M., Gaunt B., Shah R., Zschiesche D., Dumm H-P ; SECA Core technology program review, 11-14 may 2004). La mise au point de la formulation et du traitement thermique est cependant délicate car il faut prévoir les phases susceptibles de se former et leur évolution dans le temps. De plus, la modification des caractéristiques du matériau de scellement lors de la création des interfaces entre les différents éléments est une source de défauts pouvant conduire à des fuites. Cette voie est donc potentiellement intéressante pour contrôler les caractéristiques du matériau de scellement mais elle nécessite une mise au point complexe et longue, de la formulation et du traitement thermique, qui aujourd'hui lui interdit une mise en oeuvre industrielle.

Un moyen facile de modifier les caractéristiques d'un verre est de lui ajouter une phase cristallisée (Balachandran U., Dusek J.T., Emerson J.E., Maiya P.S., Picciolo J.J., 1998, brevet des Etats Unis d'Amérique N° 5,725,218). Ce type de scellement est couramment utilisé en électronique pour adapter les coefficients de dilatation thermique des verres, aux éléments métalliques utilisés pour les jonctions conductrices électroniques.

Chou et al. (Chou Y-S., Stevenson J.W., 2002, J. of Power Sources, vol 112, p. 376-383 ; Chou Y-S., Stevenson J.W., 2002, Advances in joining of ceramics, p 175-184 ; Chou Y-S., Stevenson J.W., Chick L.A., 2002, J. of Power Sources, vol 112, p. 130-136 ; Simner, S.P., Stevenson, J.W., 2001, Journal of Power Sources, vol 102, p 310-316) ont élaboré et étudié le comportement d'un empilement de feuillets ou de monocristaux de mica comme scellement d'une SOFC de géométrie planaire. Des fuites localisées aux interfaces entre le mica et les éléments de la jonction ont conduit les auteurs à ajouter une couche de verre qui parfait l'étanchéité. L'application d'une force de compression permet encore de limiter les fuites.

R. Loehman et al. ont étudié l'étalement et l'évolution de l'angle de mouillage, de la viscosité ainsi que du coefficient d'expansion thermique à haute température, de mélanges verres - particules céramiques, de différentes formes et tailles. L'angle de mouillage dépend de la quantité et de la forme des particules introduites. La viscosité croît avec la diminution de la taille des particules céramiques et leur concentration. L'application visée étant les piles à combustible de type SOFC, un métal est ajouté pour assurer la conduction électrique de la jonction. Le CET du mélange augmente avec l'ajout de particules céramiques et peut évoluer à cause d'un début de cristallisation du verre (Loehman R., Brochu M., Gaunt B., Shah R., Zschiesche D., Dumm H-P, SECA Core technology program review, 11-14 may 2004).

Une approche similaire est présentée par G.L. Larsen et al. l'objectif étant de contrôler la viscosité, la température d'écoulement et le coefficient d'expansion thermique du matériau de scellement en ajoutant des particules céramiques. Cette approche est comparable à l'utilisation d'un verre qui est fluide à la température d'utilisation ; le contrôle des propriétés du verre comme la température de transition vitreuse et le coefficient d'expansion thermique, est dans ce cas facilité par l'incorporation d'une phase céramique plutôt que par l'ajustement de sa composition chimique.

Cependant, la forte quantité de phase vitreuse peut poser un problème de corrosion ou d'évaporation à haute température et de résistance mécanique si la différence de pression est très grande (Larsen G.L., Larsen P.H., Bagger C., 2004, brevet des Etats Unis d'Amérique N° US 6,828,263 B1).

Shutz et al. ont étudié les mélanges à base de verre et de matériau céramique. Pour les applications impliquant la séparation de gaz, le matériau céramique est identique à celui utilisé pour élaborer la membrane. Des compositions contenant 50 % volumique à 80 % volumique de céramique, semblent adaptées à leur application et confèrent les propriétés attendues au scellement (Schutz J.B., Barton T.F., 2002, brevet des Etats Unis d'Amérique N° US 6,402,156 B1).

A l'occasion de leurs recherches, tant sur l'amélioration de la stabilité d'une jonction entre un matériau céramique et un alliage métallique, que sur l'amélioration de l'étanchéité du scellement aux gaz dans la gamme de température allant d'environ 20°C à environ 900°C, afin de séparer deux atmosphères, l'une oxydante, l'autre réductrice et avec une différence de pression s'étendant de 0 jusqu'à 3.10⁶ Pa (30 bars) de part et d'autre de ladite jonction, les inventeurs ont cherché à mettre au point une architecture / microstructure de cette dernière qui améliore la stabilité thermique et chimique ainsi que la résistance mécanique du scellement dans les conditions d'utilisation précédemment citées.

L'invention a pour objet un procédé de fabrication d'une jonction céramique
- métal, entre une pièce en céramique et une pièce métallique ou en alliage métallique, au moyen d'un matériau, dit matériau de scellement, caractérisé en ce que ledit matériau de scellement est constitué pour 100 % de sa masse :
- de 10 % massique à 90 % massique d'un verre ou d'un mélange de verre (V), et
- de 10 % massique à 90 % massique d'au moins un matériau céramique (C), de nature chimique identique ou différente de celle de la pièce céramique à sceller ;
et en ce que ledit procédé comprend les étapes successives suivantes :
ou bien
- une étape (a) de préparation d'un mélange de poudres (M) constitué pour 100 % de sa masse :
- de 10 % massique à 90 % massique d'un verre ou d'un mélange de verre (V), et
- de 10 % massique à 90 % massique d'au moins un matériau céramique (C), à partir d'une poudre de verre (V) et d'une poudre de matériau céramique (C);
- une étape (b) de pressage de la préforme du matériau de scellement, à partir du mélange de poudres (M) préparé à l'étape (a) ;
- une étape (c) de densification de la préforme du matériau de scellement préparée à l'étape (b) ;
- une étape (d) de mise en place des éléments de la jonction céramique complémentaires à la préforme dudit matériau de scellement densifiée à l'étape (c) ; et
- une étape (e) de traitement thermique de mise en place du scellement préparé à l'étape (d) ;
ou bien
- une étape (b) de pressage d'une préforme d'une poudre d'au moins un matériau céramique (C) ;
- une étape (c') de densification partielle de la préforme préparée à l'étape (b) ;
- une étape (d) de mise en place des éléments de la jonction céramique - métal, complémentaires à la préforme dudit matériau céramique (C) densifiée à l'étape (c) ; et
- une étape (e') de traitement thermique d'infiltration du verre ou du mélange de verres (V) dans la porosité de la préforme mise en place à l'étape (d), pour former ledit matériau de scellement constitutif de ladite jonction céramique - métal.

Par pièce en céramique, on désigne principalement une pièce en un conducteur ionique, de préférence un conducteur ionique et électronique, ladite céramique comprenant de façon plus préférée au moins un réseau cristallin comportant au moins une lacune en oxygène, ladite céramique étant, de façon encore plus préférée, choisie parmi les céramiques de structure cristalline perovskite et les oxydes de cérium.

Par pièce métallique ou en alliage métallique, on désigne principalement une pièce en un métal ou en un alliage métallique présentant une résistance à l'oxydation sous atmosphère oxydante jusqu'à 900°C, une résistance à la réduction sous atmosphère réductrice jusqu'à 900°C, une résistance au fluage jusqu'à 900°C, une température de fusion supérieure ou égale à 900°C, et un CET dans l'intervalle de température [20°C à 900°C], entre 8.10⁻⁶ / °C et 25.10⁻⁶ /°C, de préférence entre 10⁻⁵ / °C et 18.10⁻⁶ /°C. Le CET est déterminé au moyen d'un dilatomètre. Cet appareil est un four associé à un capteur de déplacement. On introduit un échantillon de forme parallélépipédique et on enregistre sa variation de longueur lors d'une montée en température à vitesse contrôlée. Le CET est défini dans une gamme de température donnée et correspond à la variation de longueur divisée par la longueur initiale de l'échantillon.)

L'étape (a) de préparation du mélange de poudres (M) dans les proportions en verre (V) et en matériau céramique (C), peut être réalisée à partir d'une poudre de verre et d'une poudre de matériau céramique, déjà finement divisées et dispersées, c'est à dire préparées indépendamment l'une de l'autre, en termes de taille de particules, de surface spécifique et de distribution granulométrique. L'étape (aᵥ) de traitement préalable de la poudre de verre (V) et l'étape (a_{c}) de traitement préalable de la poudre de matériau céramique (C), incluent indépendamment l'une de l'autre, une ou plusieurs étapes de broyage pour arriver à la granulométrie souhaitée, et éventuellement un traitement thermique pour éliminer les éléments organiques éventuellement présents dans l'une ou l'autre de ces poudres. Le cas échéant, ledit traitement thermique est effectué soit avant le broyage de la poudre, soit après le broyage de la poudre, lorsqu'il s'agit de la poudre de verre, et avant le broyage de la poudre lorsqu'il s'agit de la poudre de matériau céramique C. Cette méthode de préparation et les proportions relatives de céramique et de verre permettent d'obtenir une microstructure constituée d'un squelette céramique dont la porosité est comblée par le verre. Une fois préparées, les deux poudres sont ensuite mélangées, le mélange étant homogénéisé par rotation, par exemple au turbula, qui est un appareil pour remuer les poudres, ou en jarre, éventuellement en milieu liquide, tel l'eau, pour obtenir une suspension homogène des 2 éléments. Si nécessaire ou si désiré, le milieu liquide est ensuite éliminé par chauffage avant la préparation de la préforme.

On peut aussi réaliser l'étape (a) du procédé tel que défini précédemment sans traitement préalable des poudres. Il est alors nécessaire dans ce cas, de faire subir au mélange (M) obtenu, éventuellement un traitement thermique pour éliminer les éléments organiques éventuellement présents, et une ou plusieurs étapes de broyage et/ ou d'attrition pour arriver à la granulométrie souhaitée avant de préparer la préforme.

L'étape (b) de pressage de la préforme du matériau de scellement, à partir du mélange de poudres (M) préparé à l'étape (a) ou de pressage d'une préforme d'une poudre d'au moins un matériau céramique (C), est généralement effectuée par pressage uniaxial ou par pressage isostatique. La seconde méthode permet d'obtenir une compaction plus homogène mais la première est plus facile à mettre en oeuvre.

Le mélange de poudres (M) ou le cas échéant, la poudre de matériau céramique (C), est éventuellement séché pour faciliter le pressage. On peut éventuellement ajouter à la poudre, un liant organique, par exemple le PEG 6000, pour favoriser la tenue mécanique en cru.

L'étape (c) de densification de la préforme obtenue à l'étape (b), comprend généralement un traitement thermique de densification pour limiter au maximum le retrait volumique au cours de la réalisation postérieure du scellement. Cette précaution permet d'améliorer l'adhérence entre le matériau de scellement et les pièces à joindre et de s'assurer que tout le volume sera comblé. Le cycle thermique de densification comprend un palier de déliantage permettant l'élimination des produits organiques utilisés lors de la préparation de la poudre et du pressage et un palier de densification sous air, avec un contrôle des vitesses de montée et de descente en température. Dans le cas de la préparation d'une préforme en céramique sans verre, l'étape c' de densification partielle est effectuée en ajustant la température et la durée de palier de température pour empêcher la densification complète. L'étape c' peut aussi consister en l'adjonction d'un porogène à la préforme obtenue à l'étape b). L'étape c' peut aussi consister à ajouter un porogène (composé organique) qui est éliminé lors d'un cycle thermique identique à celui de l'étape c telle que définie précédemment, à savoir un palier de déliantage et un palier de densification.

L'étape (d) de mise en place des éléments de la jonction céramique - métal, complémentaires à la préforme dudit matériau de scellement densifiée à l'étape (c) ou le cas échéant à l'étape c', comprend l'assemblage dudit matériau de scellement ou du précurseur de celui-ci, de la pièce en céramique et de la pièce métallique ou en alliage métallique et de la pièce en céramique ou en précurseur de celle-ci, ledit assemblage comportant généralement un calage par maintien du matériau de scellement au niveau de la zone de jonction de la pièce métallique ou en alliage métallique. Lorsque la pièce céramique est un tube, la pièce métallique est par exemple une douille et la préforme dudit matériau de scellement une pièce annulaire. L'étape (d) comprend éventuellement une étape (d₁) de pré-oxydation au moins partielle d'une surface de la zone de jonction de la pièce métallique ou en alliage métallique, notamment une douille, de façon à former au moins partiellement au moins une couche d'au moins un oxyde métallique sur ladite surface.

L'étape (e) de traitement thermique de mise en place du scellement préparé à l'étape (d), permet de déformer la préforme afin de remplir le volume entre les pièces à joindre, d'assurer la formation des interfaces entre le matériau de scellement et les pièces à joindre et de réaliser les ponts entre les particules céramiques pour conférer les propriétés mécaniques au matériau de scellement. La température de ramollissement du matériau de scellement est contrôlée par les étapes précédentes du procédé, à savoir les étapes de préparation des poudres et de préforme. Si nécessaire une pression peut être appliquée sur le matériau de scellement afin de favoriser son étalement et/ou de diminuer la température de réalisation de la jonction. Le cycle thermique de ce traitement comprend généralement deux paliers ; le premier permet l'écoulement de la préforme pour remplir l'espace entre les pièces à sceller et forme les interfaces. La température et la durée de ce palier dépendent des caractéristiques du mélange. Le second palier de recuisson du verre permet de limiter les contraintes thermiques qui peuvent se créer lors de la solidification du verre. Ces traitements thermiques sont réalisés soit sous air, soit sous atmosphère contrôlée. L'étalement de la préforme peut être modifiée en fonction de l'atmosphère utilisée.

Le cas échéant l'étape (e') de traitement thermique d'infiltration du verre ou du mélange de verres (V) dans la porosité de la préforme mise en place à l'étape (d), pour former ledit matériau de scellement constitutif de ladite jonction céramique - métal, consiste à apporter le verre, soit à l'aide d'une préforme ou de poudre placée au-dessus de la céramique poreuse, soit en coulant le verre en fusion. La première technique semble plus favorable pour éviter les chocs thermiques sur le tube céramique. L'infiltration du verre nécessite parfois une atmosphère particulière pour améliorer sa mouillabilité et donc son écoulement dans la porosité. Cette atmosphère peut être un gaz ou un vide. Deux paliers thermiques sont généralement nécessaires, le premier pour assurer l'écoulement du verre et le second pour relâcher les contraintes qui peuvent apparaître lors de la solidification du verre.

Par verre ou mélange de verres on désigne dans le procédé tel que défini ci-dessus, tout verre ou mélange de verres qui soit compatible avec les oxydes formés à la surface du métal ou de l'alliage métallique, qui soit résistant à la réduction sous atmosphère réductrice jusqu'à 900°C, et à l'oxydation sous atmosphère oxydante jusqu'à 900°C et qui, mélangé dans les proportions revendiquées avec le matériau céramique C, conduise à un mélange qui possède préférentiellement un CET qui soit supérieur au CET du métal ou de l'alliage métallique et inférieur au CET de la céramique.

Selon un aspect particulier du procédé tel que défini ci dessus, on met en oeuvre un verre ou mélange de verre dont le coefficient d'expansion thermique est compris entre 3 10⁻⁶ et 15 10⁻⁶ / °C entre 20 °C et 500 °C.

Par matériau céramique de nature chimique identique ou différente de celle de la pièce céramique à sceller, on désigne dans le procédé, notamment un matériau (A) comportant pour 100 % de son volume :
(i) - au moins 75 % en volumique et au plus 100 % volumique d'un composé (C₁) choisi parmi les oxydes céramiques dopés qui, à la température d'utilisation, sont sous forme d'un réseau cristallin présentant des lacunes en ions oxydes de phase perovskite, de formule (I) :

   Mα₁₋ₓ₋ᵤ Mα'ₓ Mα"ᵤ Mβ_{1-y-v} Mβ'_{y} Mβ"ᵥO_{3-w} (I)

   dans laquelle :
   - Mα représente un atome choisi parmi le scandium, l'yttrium ou dans les familles des lanthanides, des actinides ou des métaux alcalinoterreux;
   - Mα' différent de Mα, représente un atome choisi parmi le scandium, l'yttrium ou dans les familles des lanthanides, des actinides ou des métaux alcalino-terreux ;
   - Mα" différent de Mα et de Mα', représente un atome choisi parmi l'aluminium (Al), le gallium (Ga), l'indium (In), le thallium (TI) ou dans la famille des métaux alcalino-terreux ;
   - Mβ représente un atome choisi parmi les métaux de transition ;
   - Mβ' différent de Mβ, représente un atome choisi parmi les métaux de transition, l'aluminium (Al), l'indium (In), le gallium (Ga), le germanium (Ge), l'antimoine (Sb), le bismuth (Bi), l'étain (Sn), le plomb (Pb) ou le titane (Ti) ;
   - Mβ" différent de Mβ et de Mβ', représente un atome choisi parmi les métaux de transition, les métaux de famille des alcalino-terreux, l'aluminium (AI), l'indium (In), le gallium (Ga), le germanium (Ge), l'antimoine (Sb), le bismuth (Bi), l'étain (Sn), le plomb (Pb) ou le titane (Ti);
   - 0 < x ≤ 0,5;
   - 0 ≤ u ≤ 0,5;
   - (x + u) ≤ 0,5;
   - 0 ≤ y ≤ 0,9;
   - 0 ≤ v ≤ 0,9;
   - 0 ≤ (y + v) ≤ 0,9
      et w est tel que la structure en cause est électriquement neutre;
(ii) - éventuellement jusqu'à 25 % en volume d'un composé (C₂), différent du composé (C₁), choisi ou bien parmi les matériaux de type oxyde comme les oxydes de bore, d'aluminium, de gallium, de cérium, de silicium, de titane, de zirconium, de zinc, de magnésium ou de calcium, de préférence parmi l'oxyde de magnésium (MgO), l'oxyde de calcium (CaO), l'oxyde d'aluminium (Al₂O₃), l'oxyde de zirconium (ZrO₂), l'oxyde de titane (TiO₂) ou la cérine (CeO₂); les oxydes mixtes de strontium et d'aluminium SrAl₂O₄ ou Sr₃Al₂O₆ ; l'oxyde mixte de baryum et de titane (BaTiO₃) ; l'oxyde mixte de calcium et de titane (CaTiO₃) ; les silicates d'aluminium et/ou de magnésium comme la mullite (2SiO₂.3Al₂O₃), la cordiérite (Mg₂Al₄Si₅O₁₈) ou la phase spinelle MgAl₂O₄ ; l'oxyde mixte de calcium et de titane (CaTiO₃) ; les phosphates de calcium et leurs dérivés, comme l'hydroxy apatite Ca₁₀(PO₄)₆(OH)₂ ou le phosphate tricalcique Ca₃(PO₄)₂ ; ou encore des matériaux de type perovskite comme La_{0,5}Sr_{0,5}Fe_{0,9}Ti_{0,1}0_{3-δ}, La_{0,6}Sr_{0,4}Fe_{0,9}Ga_{0,1}O_{3-δ}, La_{0,5}Sr_{0,5}Fe_{0,9}Ga_{0,1}O_{3-δ} ou La_{0,6}Sr_{0,4}Fe_{0,9}Ti_{0,1}O_{3-δ} ou bien parmi des matériaux de type non oxyde et de préférence parmi les carbures ou les nitrures comme le carbure de silicium (SiC), le nitrure de bore (BN), le nitrure d'aluminium (AIN) ou le nitrure de silicium (Si₃N₄), les « sialon » (SiAlON), ou bien parmi le nickel (Ni), le platine (Pt), le palladium (Pd) ou le rhodium (Rh), les alliages métalliques ou des mélanges de ces différents types de matériaux et,
(iii) - éventuellement jusqu'à 2,5 % en volume d'un composé (C₁₋₂) produit d'au moins une réaction chimique représentée par l'équation :

   xF_{C1} + yF_{C2} ------> zF_{C1-2},

   équation dans laquelle F_{C1}, F_{C2} et F_{C1-2}, représentent les formules brutes respectives des composés (C₁), (C₂) et (C₁₋₂) et x, y et z représentent des nombres rationnels supérieurs ou égaux à 0 ;

Comme matériau (A) mis en oeuvre dans le procédé tel que défini précédemment, il y a par exemple celui dans lequel la proportion volumique en composé (C₁₋₂), éventuellement présent, tend vers 0 et/ou celui dans lequel la proportion volumique en composé (C₂) éventuellement présent, est supérieure ou égale à 0,1 % et inférieure ou égale à 10 %.

Parmi les composés (C₁) constitutif du matériau (A), il y a par exemple le composé (C₁) choisi :
ou parmi les composés de formule (Ia) :

La₁₋ₓ₋ᵤMα'ₓMα"ᵤMβ_{1-y-v}Mβ'_{y}Mβ"ᵥO_{3-w} (Ia),

correspondant à la formule (I), dans laquelle Mα représente un atome de lanthane ;
ou parmi les composés de formule (Ib):

Mα₁₋ₓ₋ᵤSrₓMα"ᵤMβ_{1-y-v}Mβ_{y}MβᵥO_{3-w} (Ib),

correspondant à la formule (I), dans laquelle Mα' représente un atome de strontium ;
ou bien parmi les composés de formule (Ic) :

Mα₁₋ₓ₋ᵤMα'ₓMα"ᵤFe_{1-y-v}Mβ'_{y}Mβ"ᵥO_{3-w} (Ic),

correspondant à la formule (I), dans laquelle Mβ représente un atome de fer ; parmi ceux- ci il y a par exemple le composé (C₁) choisi :
ou bien parmi les composés de formule (Id) :

La₁₋ₓ₋ᵤSrₓMα"ᵤFe_{1-y-v}Mβ'_{y}Mβ"ᵥO_{3-w} (Id),

correspondant à la formule (Ia) dans laquelle Mα' représente un atome de strontium et Mβ représente un atome de fer ;
ou bien parmi les composés de formule (Ie):

La₁₋ₓ₋ᵤMα'ₓAlᵤFe_{1-y-v}Mβ'_{y}Mβ"ᵥO_{3-w} (Ie),

correspondant à la formule (Ia) dans laquelle Mα" représente un atome d'aluminium et Mβ représente un atome de fer ;
ou bien parmi les composés de formule (If) :

La₁₋ₓSrₓ Fe_{1-y} Mβ'_{y}O_{3-w} (If),

correspondant à la formule (Ia) dans laquelle Mα' représente un atome de strontium, Mβ représente un atome de fer et u et v sont égaux à 0 ;
ou bien parmi les composés de formule (Ig) :

La₁₋ᵤCaᵤ Fe_{1-y} Mβ'_{y}O_{3-w} (Ig),

correspondant à la formule (Ia) dans laquelle Mα' représente un atome de calcium, Mβ représente un atome de fer et x et v sont égaux à 0 ;
ou bien parmi les composés de formule (Ih) :

La₁₋ᵤBaᵤ Fe_{1-y} Mβ'_{y}O_{3-w} (Ih),

correspondant à la formule (Ia) dans laquelle Mα' représente un atome de baryum, Mβ représente un atome de fer et x et v sont égaux à 0 ;
ou bien parmi les composés de formule (Ii) :

La₁₋ₓ₋ᵤSrₓCaᵤFe_{1-y-v}Mβ'_{y}Mβ"ᵥO_{3-w} (Ii),

correspondant à la formule (Id) dans laquelle Mα" représente un atome de calcium ;
ou parmi les composés de formule (Ij) :

La₁₋ₓ₋ᵤSrₓBaᵤFe_{1-y-v}Mβ'_{y}Mβ"ᵥO_{3-w} (Ij),

correspondant à la formule (Id) dans laquelle dans laquelle Mα" représente un atome de baryum.

Comme de tels composés, on peut citer le composé (C₁) choisi parmi les composés de formules La₁₋ₓSrₓFe_{1-y}GaᵥO_{3-w}, La₁₋ₓSrₓFe_{1-y}Ti_{y}O_{3-w}, La₁₋ₓSrₓFeO_{3-w}, La₁₋ᵤCaᵤFe_{1-y}GaᵥO_{3-w}, La₁₋ᵤCaᵤFe_{1-y}Ti_{y}O_{3-w}, La₁₋ᵤCaᵤFeO_{3-w}, La₁₋ᵤBaᵤFe_{1-y}GaᵥO_{3-w}, La₁₋ᵤBaᵤFe_{1-y}Ti_{y}O_{3-w}, La₁₋ᵤBaᵤFeO_{3-w}, La₁₋ₓ₋ᵤSrₓAlᵤFe_{1-y}Ti_{y}O_{3-w}, La₁₋ₓ₋ᵤSrₓCaᵤFe_{1-y}Ti_{y}O_{3-w}, La₁₋ₓ₋ᵤSrₓBaᵤFe_{1-y}Ti_{y}O_{3-w}, La₁₋ₓ₋ᵤSrₓAlᵤFe_{1-y}GaᵥO_{3-w}, La₁₋ₓ₋ᵤSrₓCaᵤFe_{1-y}GaᵥO_{3-w}, La₁₋ₓ₋ᵤSrₓBaᵤFe_{1-y}GaᵥO_{3-w}, La₁₋ₓSrₓFe_{1-y}Ti_{y}O_{3-w}, La₁₋ᵤCaᵤFe_{1-y}Ti_{y}O_{3-w}, La₁₋ᵤBaᵤFe_{1-y}Ti_{y}O_{3-w}, La₁₋ₓSrₓFe_{1-y}GaᵥO_{3-w}, La₁₋ᵤCaᵤFe_{1-y}GaᵥO_{3-w}, La₁₋ᵤBaᵤFe_{1-y}GaᵥO_{3-w}, La₁₋ᵤBaᵤFeO_{3-w}, La₁₋ᵤCaᵤFeO_{3-w} ou La₁₋ₓSrₓFeO_{3-w}, comme ceux de formules La_{0,6}Sr_{0,4}Fe_{0,9}Ga_{0,1}O_{3-w}, La_{0,9}Sr_{0,1}Fe_{0,9}Ga_{0,1}O_{3-w}, La_{0,5}Sr_{0,5}Fe_{0,9}Ti_{0,1}O_{3-w}, La_{0,9}Sr_{0,1}Fe_{0,9}Ti_{0,1}O_{3-w}, La_{0,6}Sr_{0,4}Fe_{0,2}Co_{0,8}O_{3-w} ou La_{0,9}Sr_{0,1} Fe_{0,2}Co_{0,8}O_{3-w}.

Parmi les composés (C₂) constitutif du matériau (A), il y a par exemple le composé (C₂) choisi parmi l'oxyde de magnésium (MgO), l'oxyde de calcium (CaO), l'oxyde d'aluminium (Al₂O₃), l'oxyde de zirconium (ZrO₂), l'oxyde de titane (TiO₂), les oxydes mixtes de strontium et d'aluminium (SrAl₂O₄) ou (Sr₃Al₂O₆), l'oxyde mixte de baryum et de titane (BaTiO₃), l'oxyde mixte de calcium et de titane (CaTiO₃), La_{0,5}Sr_{0,5}Fe_{0,9}Ti_{0,1}O_{3-δ} ou La_{0,6}Sr_{0,4}Fe_{0,9}Ga_{0,1}O_{3-δ}.

L'invention a aussi pour objet une composition, caractérisée en ce qu'elle est constituée pour 100 % de sa masse :
- de 10 % massique à 90 % massique, d'un verre ou d'un mélange de verre (V), et
- de 10 % massique à 90 % massique d'au moins un matériau (A) comportant pour 100 % de son volume :

(i) - au moins 75 % en volumique et au plus 100 % volumique d'un composé (C₁) choisi parmi les oxydes céramiques dopés qui, à la température d'utilisation, sont sous forme d'un réseau cristallin présentant des lacunes en ions oxydes de phase perovskite, de formule (I) telle que définie précédemment :
(ii) - éventuellement jusqu'à 25 % en volume d'un composé (C₂) tel que défini précédemment, différent du composé (C₁) et,
(iii) - éventuellement jusqu'à 2,5 % en volume d'un composé (C₁₋₂) tel que défini précédemment.

Comme exemple de composition définie ci-dessus, il y a celle pour laquelle la proportion volumique en composé (C₁₋₂), éventuellement présent dans le matériau (A), tend vers 0 ; celle pour laquelle la proportion volumique en composé (C₂) éventuellement présent dans le matériau (A), est supérieure ou égale à 0,1 % et inférieure ou égale à 10 % ; celle pour laquelle le composé (C₁) présent dans le matériau (A) est choisi :
ou bien parmi les composés de formule (Ia):

La₁₋ₓ₋ᵤMα'ₓMα"ᵤMβ_{1-y-v}Mβ'_{y}Mβ"ᵥO_{3-w} (Ia),

correspondant à la formule (I), dans laquelle Mα représente un atome de lanthane ;
ou bien parmi les composés de formule (Ib) :

Mα₁₋ₓ₋ᵤSrₓMα"ᵤMβ_{1-y-v}Mβ'_{y}Mβ"ᵥO_{3-w} (Ib),

correspondant à la formule (I), dans laquelle Mα' représente un atome de strontium ;
ou bien parmi les composés de formule (Ic) :

Mα₁₋ₓ₋ᵤMα'ₓMα"ᵤFe_{1-y-v}Mβ'_{y}Mβ"ᵥO_{3-w} (Ic),

correspondant à la formule (1), dans laquelle Mβ représente un atome de fer ; plus particulièrement celle pour laquelle le composé (C₁) présent dans le matériau (A) est choisi :
ou bien parmi les composés de formule (Id):

La₁₋ₓ₋ᵤSrₓMα"ᵤFe_{1-y-v}Mβ'_{y}Mβ"ᵥO_{3-w} (Id),

correspondant à la formule (Ia) dans laquelle Mα' représente un atome de strontium et Mβ représente un atome de fer ;
ou bien parmi les composés de formule (Ie) :

La₁₋ₓ₋ᵤMα'ₓAlᵤFe_{1-y-v}Mβ'_{y}Mβ"ᵥO_{3-w} (Ie),

correspondant à la formule (Ia) dans laquelle Mα" représente un atome d'aluminium et Mβ représente un atome de fer ;
ou bien parmi les composés de formule (If) :

La₁₋ₓSrₓ Fe_{1-y} Mβ'_{y}O_{3-w} (If),

correspondant à la formule (Ia) dans laquelle Mα' représente un atome de strontium, Mβ représente un atome de fer et u et v sont égaux à 0 ;
ou bien parmi les composés de formule (Ig) :

La₁₋ᵤCaᵤ Fe_{1-y} Mβ'_{y}O_{3-w} (Ig),

correspondant à la formule (Ia) dans laquelle Mα' représente un atome de calcium, Mβ représente un atome de fer et x et v sont égaux à 0 ;
ou bien parmi les composés de formule (Ih) :

La₁₋ᵤBaᵤ Fe_{1-y} Mβ'_{y}O_{3-w} (Ih),

correspondant à la formule (Ia) dans laquelle Mα' représente un atome de baryum, Mβ représente un atome de fer et x et v sont égaux à 0 ;
ou bien parmi les composés de formule (Ii) :

La₁₋ₓ₋ᵤSrₓCaᵤFe_{1-y-v}Mβ'_{y}Mβ"ᵥO_{3-w} (Ii),

correspondant à la formule (Id) dans laquelle Mα" représente un atome de calcium ;
ou parmi les composés de formule (Ij) :

La₁₋ₓ₋ᵤSrₓBaᵤFe_{1-y-v}Mβ'_{y}Mβ"ᵥO_{3-w} (Ij),

correspondant à la formule (Id) dans laquelle dans laquelle Mα" représente un atome de baryum ; celle pour laquelle le composé (C₁) présent dans le matériau (A) est choisi parmi les composés de formules :
La₁₋ₓSrₓFe_{1-y}GaᵥO_{3-w}, La₁₋ₓSrₓFe_{1-y}Ti_{y}O_{3-w}, La₁₋ₓSrₓFeO_{3-w}, La₁₋ᵤCaᵤFe_{1-y}GaᵥO_{3-w}, La₁₋ᵤCaᵤFe_{1-y}Ti_{y}O_{3-w}, La₁₋ᵤCaᵤFeO_{3-w}, La₁₋ᵤBaᵤFe_{1-y}GaᵥO_{3-w}, La₁₋ᵤBaᵤFe_{1-y}Ti_{y}O_{3-w}, La₁₋ᵤBaᵤFeO_{3-w}, La₁₋ₓ₋ᵤSrₓAlᵤFe_{1-y}Ti_{y}O_{3-w}, La₁₋ₓ₋ᵤSrₓCaᵤFe_{1-y}Ti_{y}O_{3-w}, La₁₋ₓ₋ᵤSrₓBaᵤFe_{1-y}Ti_{y}O_{3-w}, La₁₋ₓ₋ᵤSrₓAlᵤFe_{1-y}GaᵥO_{3-w}, La₁₋ₓ₋ᵤSrₓCaᵤFe_{1-y}GaᵥO_{3-w}, La₁₋ₓ₋ᵤSrₓBaᵤFe_{1-y}GaᵥO_{3-w}, La₁₋ₓSrₓFe_{1-y}Ti_{y}O_{3-w}, La₁₋ᵤCaᵤFe_{1-y}Ti_{y}O_{3-w}, La₁₋ᵤBaᵤFe_{1-y}Ti_{y}O_{3-w}, La₁₋ₓSrₓFe_{1-y}GaᵥO_{3-w}, La₁₋ᵤCaᵤFe_{1-y}GaᵥO_{3-w}, La₁₋ᵤBaᵤFe_{1-y}GaᵥO_{3-w}, La₁₋ᵤBaᵤFeO_{3-w}, La₁₋ᵤCaᵤFeO_{3-w} ou La₁₋ₓSrₓFeO_{3-w},
et plus particulièrement parmi ceux de formules :
La_{0,6}Sr_{0,4}Fe_{0,9}Ga_{0,1}O_{3-w}, La_{0,9}Sr_{0,1}Fe_{0,9}Ga_{0,1}O_{3-w}, La_{0,5}Sr_{0,5}Fe_{0,9}Ti_{0,1}O_{3-w}, La_{0,9}Sr_{0,1}Fe_{0,9}Ti_{0,1}O_{3-w}, La_{0,6}Sr_{0,4}Fe_{0,2}CO_{0,8}O_{3-w} ou La_{0,9}Sr_{0,1}Fe_{0,2}Co_{0,8}O_{3-w}.
et/ou celle pour laquelle le composé (C₂) présent dans le matériau (A) est choisi parmi l'oxyde de magnésium (MgO), l'oxyde de calcium (CaO), l'oxyde d'aluminium (Al₂O₃), l'oxyde de zirconium (ZrO₂), l'oxyde de titane (TiO₂), les oxydes mixtes de strontium et d'aluminium SrAl₂O₄ ou Sr₃Al₂O₆, l'oxyde mixte de baryum et de titane (BaTiO₃), l'oxyde mixte de calcium et de titane (CaTiO₃), La_{0,5}Sr_{0,5}Fe_{0,9}Ti_{0,1}O_{3-δ} ou La_{0,6}Sr_{0,4}Fe_{0,9}Ga_{0,1}O_{3-δ}.

Selon un autre aspect, l'invention a pour objet l'utilisation de la composition telle que définie ci dessus, comme matériau de scellement, d'une jonction céramique - métal, entre une pièce en céramique et une pièce métallique ou en alliage métallique.

Selon un dernier aspect l'invention a pour objet un ensemble (5) de jonction céramique - métal, ledit ensemble (5) comportant :
1) au moins une pièce (3) en céramique se présentant sous la forme d'un tube creux et sensiblement cylindrique d'axe (X'X), fermé à l'une de ses extrémités (3b) et ouvert à l'autre extrémité (3a), définissant une zone intérieure appelée zone céramique (ZC) et une zone extérieure appelée zone métallique (ZM), lesdites zone céramique (ZC) et zone métallique (ZM) ne communiquant pas entre elles et étant séparées au moins partiellement par la pièce (3) en céramique, au moins partiellement gainée par
2) au moins une douille (2) en métal ou alliage métallique comportant une partie (2b) ci-après nommée « zone de jonction » sensiblement cylindrique et creuse d'axe (X'X) enveloppant au moins partiellement ledit tube (3), un espace (4) sensiblement annulaire d'axe (X'X) étant ménagé entre ledit tube (3) et ladite zone de jonction (2b), caractérisé en ce que l'étanchéité entre ledit tube (3) et ladite douille (2) est assurée par au moins un élément (1) de jonction céramique - métal qui est en contact avec le tube (3) et avec ladite zone de jonction (2b) de la douille (2), l'élément (1) de jonction étant au moins partiellement présent dans ledit espace (4) annulaire en en occupant un sous espace (4a) et se présentant de préférence sous la forme d'une pièce sensiblement annulaire (1),
en ce que l'élément (1) de jonction comprend au moins un matériau de scellement constitué d'une composition telle que définie à l'une des revendications 11 à 17 ;
en ce que ledit ensemble (5) de jonction est tel que ladite zone de jonction (2b) a une faible dimension (I), selon tout axe (Y'Y) traversant ladite zone de jonction (2b) et perpendiculaire à l'axe (X'X).

Dans l'ensemble tel que défini ci dessus le rapport de dimensions selon l'axe (X'X) de la zone de jonction (2b) au sous-espace (4a) est généralement au moins égal à 2/1, et est de préférence dans la fourchette de 2/1 à 100/1.

Dans l'ensemble tel que défini ci- dessus, ladite faible dimension (I) est généralement d'environ 20 µm à 500 µm, de préférence d'environ 50 µm à 400 µm, de façon encore plus préférée d'environ 200 µm à 300 µm.

Dans l'ensemble tel que défini ci-dessus la douille (2) peut comporter au moins un épaulement (2c) de support du tube (3) et/ou au moins un épaulement (2a) de calage du tube (3).

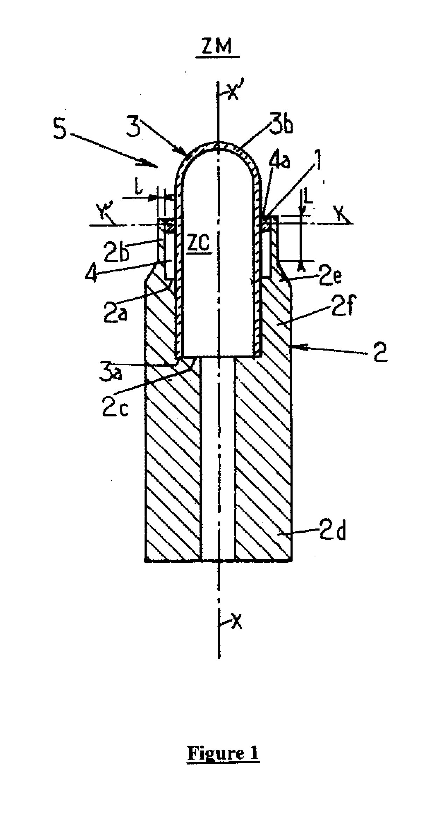

Un tel ensemble est illustré par la figure 1.

L'invention trouve son utilisation dans les applications mettant en oeuvre au moins pour partie, des matériaux céramiques scellés à des alliages métalliques et fonctionnant sous température élevée. On citera en particulier les réacteurs catalytiques membranaires pour la production et/ou la séparation de gaz (CMR: catalytic Membrane Reactor), et plus particulièrement pour la production de gaz de synthèse, les piles à combustible solide (SOFC: Solid Oxide Fuel Cell), ou les générateurs d'oxygène par électrochimie a travers une membrane céramique.

L'exposé suivant illustre l'invention sans toutefois la limiter

### (I) - Mise en évidence des température de ramollissement et coefficient d'expansion thermique de mélanges verre/céramique.

Le verre Schott 8350™ a été choisi car ses caractéristiques physico-chimiques (stabilité chimique, température de ramollissement,...) sont compatibles avec le tube céramique devant être scellé et l'alliage métallique constituant la bague. La céramique introduite dans le matériau de scellement est celle constituant le tube. Cependant, tout autre matériau céramique possédant une bonne stabilité chimique et aucune réactivité chimique vis à vis du verre ainsi qu'un CET proche de celui du tube, peut être utilisé. La morphologie (taille, forme, surface spécifique) des particules (céramique et/ou verre) est ajustée afin de faciliter la mise en oeuvre ou d'améliorer les propriétés d'écoulement ou mécanique du matériau. Dans le tableau suivant, sont reportés la composition du verre employé (Schott 8350^{™}) et la formule du matériau C utilisé.

| | | | | | |
|---|---|---|---|---|---|
| Verre Schott 8350^{™} | Al₂O₃ | SiO₂ | MgO | Na₂O | CaO |
| (% massique) | 2,0 | 73,0 | 4,0 | 14,0 | 7,0 |
| Matériau C | 100 % C₁ : La_{0,5}Sr_{0,5}Fe_{0,9}Ti_{0,1}O_{3-δ} | | | | |

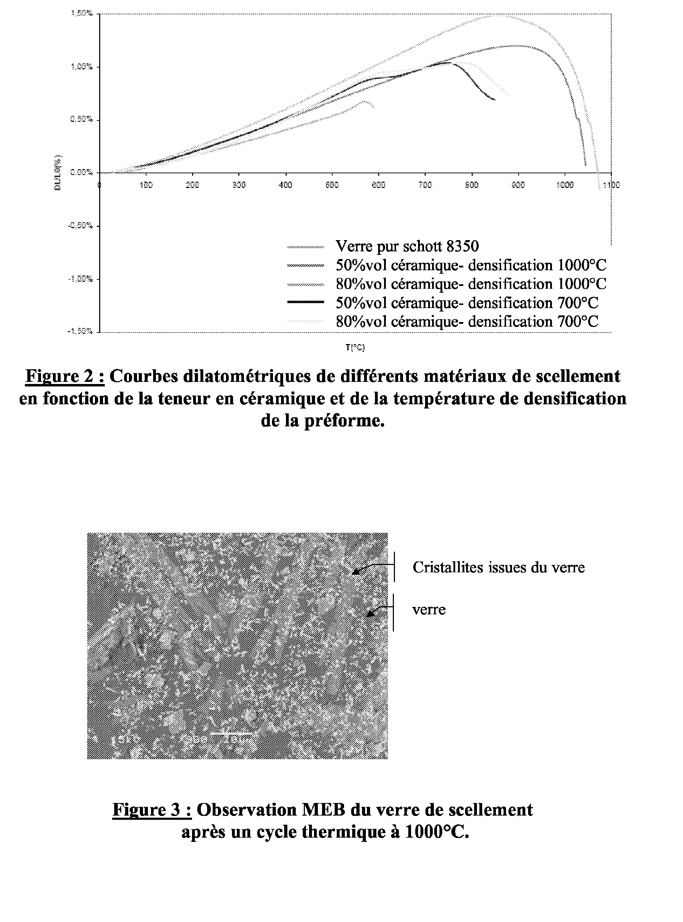

La figure 2 montre l'évolution du comportement dilatométrique des mélanges céramique / verre, en fonction de la teneur en céramique dans le verre et de la température de densification de la préforme.

La température de ramollissement des mélanges verre/céramique est largement supérieure à celle du verre pur, ce qui permet d'augmenter la température d'utilisation. On remarque que suivant la température de réalisation de la préforme, les comportements des mélanges sont différents. A 1000 °C, il semble qu'une cristallisation partielle du verre ait lieu (figure 3) alors qu'à 700 °C, pour une teneur en céramique supérieure à 30 %, le comportement est essentiellement lié aux interactions entre les particules céramiques. Ces observations sont importantes pour le «vieillissement» du matériau de scellement et sa mise en place par écoulement visqueux. Un verre cristallisé nécessite une température de mise en oeuvre plus importante mais résiste à plus haute température. La vitesse d'évaporation d'un verre partiellement cristallisé pourrait également être plus faible. Il faut faire un compromis entre les propriétés en fonctionnement et la facilité de mise en oeuvre. Il est donc préférable dans notre cas, de densifier les préformes à basse température, pour faciliter l'écoulement du verre, et de faire subir à ce dernier un traitement de cristallisation, à l'issu ou pendant le cycle de réalisation du scellement, pour améliorer ses propriétés à haute température.

Le coefficient de dilatation thermique des mélanges verre / céramique est également capital dans le développement de contraintes thermiques entre les matériaux de la liaison. Le verre pur a un CET de 9.10⁻⁶/ / °C entre 20 °C et 500 °C. Cette valeur est suffisamment proche des CET des autres matériaux pour élaborer un scellement non fissuré. Cependant une augmentation du CET du matériau de scellement permettrait de limiter encore les contraintes thermiques. Les mélanges verre/céramique ont systématiquement un CET supérieur à celui du verre seul, ce qui est favorable à la stabilité mécanique du scellement (figure 2).

L'atmosphère de réalisation du scellement joue également un rôle en terme de mouillabilité et d'étalement des mélanges verre/céramique. Une contrainte en terme de stabilité chimique peut également nécessiter l'utilisation d'une atmosphère contrôlée à haute température.

### (II) Elaboration de la jonction céramique - métal

L'objectif est de réaliser une jonction à l'aide d'un mélange céramique/verre en formant un squelette céramique dont la porosité est comblée par du verre.

### (II-1) A partir d'un mélange de poudres

### (II-1-1) Traitement des poudres

Les poudres utilisées contiennent des additifs organiques utilisés dans leur procédé de synthèse. Ces composés sont éliminés par un traitement thermique à 350 °C sous air. Ces résidus organiques sont source de bulles dans le verre en fusion. Leur présence peut modifier significativement les propriétés du matériau de scellement et induire des contraintes, limiter la résistance mécanique ou l'étanchéité.

### (II-1-2) Broyage des poudres

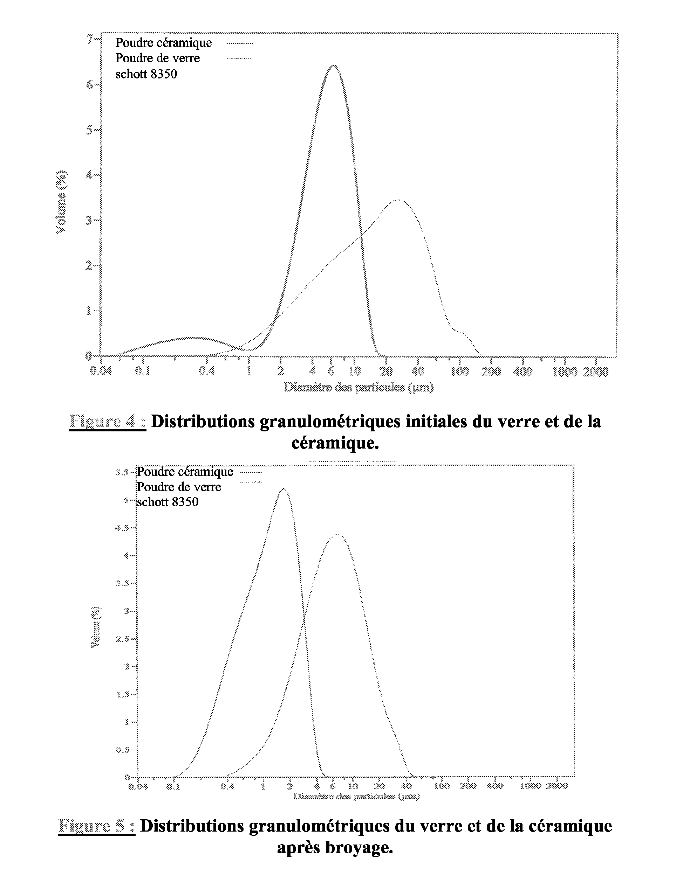

L'ajustement des granulométries des poudres est nécessaire à l'obtention d'un matériau de scellement compact et homogène ainsi qu'au contrôle de la température de fusion du verre. Les poudres sont donc broyées séparément pour atteindre la granulométrie souhaitée. La figure 5 présente les distributions granulométriques initiales (après synthèse) des poudres de Matériau C et du verre Schott 8350™. On observe des diamètres d'agglomérats et de grains importants, supérieurs à 100 µm. La figure 6 présente la distribution granulométrique des mêmes poudres après un broyage par attrition de 2 heures pour la céramique et un broyage en jarre de 1 heure pour le verre. Les paramètres de broyage utilisés sont présentés dans le tableau suivant :

| | Volume occupé par le média de broyage | Matériau des médias de broyage | Vitesse de rotation (tour/minute) | Temps (heures) |
|---|---|---|---|---|
| Matériau C | 1/2 Vol. Jarre | Zircone | 700 | 2 |
| Verre Schott 8350^{™} | 1/3 Vol. Jarre | Alumine | 320 | 1 |

Les poudres ont respectivement un d₅₀ (50% des particules ont un diamètre inférieur à cette valeur) de 1µm pour la céramique et 5µm pour le verre. Ces valeurs ont été choisies, pour obtenir un empilement final des grains le plus compact possible. Une autre technique pour améliorer encore la compacité serait de séparer les classes granulométriques et de les mélanger dans les proportions connues de l'homme de l'art. On aurait une "répartition granulométrique sur mesure". Après broyage, les poudres sont mélangées intimement, au turbula ou en jarre, en milieu aqueux, pour obtenir une suspension homogène des 2 éléments. La figure 6 montre les microstructures obtenues en fonction de l'étape de préparation des poudres. L'homogénéité de la microstructure des préformes est contrôlée par la granulométrie et la taille des particules des poudres ainsi que par le ratio céramique/verre.

Dans le cas de poudres non broyées, la microstructure est composée de grosses particules de verre et de céramique. La microstructure finale est totalement hétérogène et est subie par l'utilisateur. Le pontage entre les particules céramiques est aléatoire et difficile à établir. Des zones pauvres en verre peuvent apparaître. Un manque local de verre peut conduire à des fuites.

L'étape de préparation des poudres, notamment l'opération de broyage des poudres permet d'homogénéiser la microstructure, d'améliorer l'empilement des particules céramiques et de favoriser leur pontage (figure 6). La forme des particules céramiques a une influence importante sur l'écoulement ultérieur lors du traitement thermique du mélange. Plus la forme des grains est équiaxe et proche d'une sphère, plus l'étalement sera facile. Un compromis doit donc être trouvé entre la facilité de réalisation du scellement et ses propriétés.

L'accès du verre au niveau des interfaces est également un point primordial pour l'étanchéité et l'adhérence du scellement. Un défaut de verre conduirait à des fuites et à une mauvaise adhérence. Des bulles de gaz piégées peuvent apparaître dans les préformes ou lors de l'élaboration. Ces bulles sont néfastes à la tenue mécanique et à l'étanchéité. L'application d'une charge et le prétraitement des poudres permet de limiter le phénomène.

### (II-1-3)Traitement thermique de réalisation du scellement

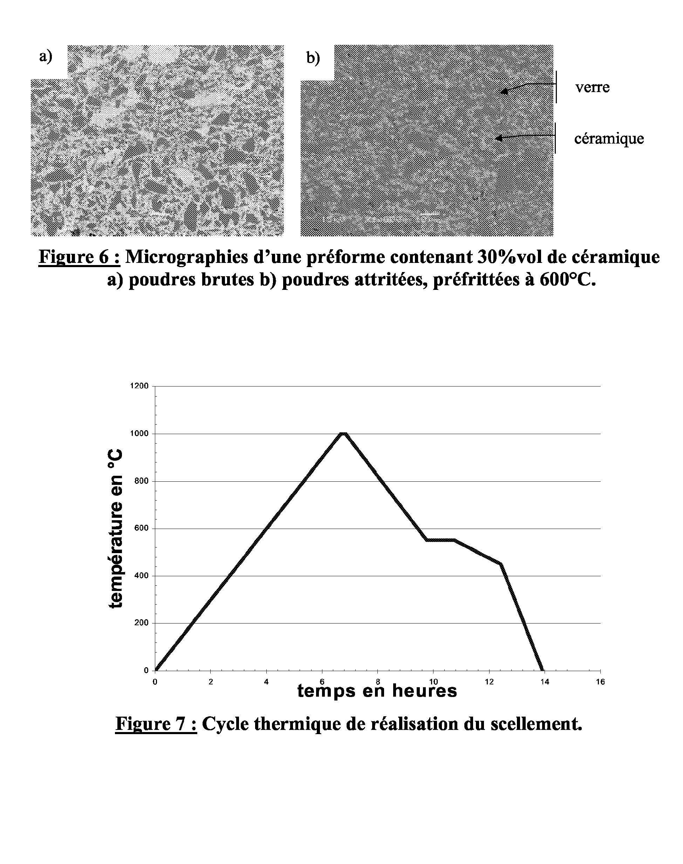

L'objectif de ce cycle thermique est de remplir le volume entre les pièces à joindre, d'assurer la formation des interfaces entre le matériau de scellement et les pièces à joindre et de réaliser les ponts entre les particules céramiques pour conférer les propriétés mécaniques au matériau de scellement. La température de ramollissement du matériau de scellement est contrôlée dans un premier temps par le comportement du verre puis est figée quand les ponts entre particules céramiques sont réalisés. Si nécessaire une charge peut être appliquée sur le matériau de scellement afin de favoriser son étalement ou de diminuer la température de réalisation de la jonction. Le cycle thermique comporte deux paliers (figure 7). Le premier, à une température comprise entre 900 °C et 1200°C, permet l'écoulement du mélange de poudres pour remplir l'espace entre les pièces à sceller et forme les interfaces. La température et la durée de ce palier dépendent des caractéristiques du mélange. Un second palier de recuisson du verre limite les contraintes thermiques qui peuvent se créer lors de la solidification du verre. La température de recuisson dépend du verre utilisé. Elle est située dans une gamme de température où le verre est très visqueux, ce qui permet de relâcher lentement les contraintes par déformation plastique. Cette donnée est issue de la courbe viscosité-température qui caractérise un verre. Pour le verre Schott 853^{™}, elle est d'environ 550°C.

### (II-2) A partir d'une préforme

Une seconde technique pour fabriquer la jonction, consiste à réaliser une préforme du matériau de scellement.

### (II-2-1) Préparation des poudres

Les poudres sont traitées comme présenté aux paragraphes précédents, afin de leur conférer les propriétés (distribution granulométrique, surface BET, morphologie) nécessaires au pressage. La distribution granulométrique et la surface spécifique sont contrôlées avant le pressage pour obtenir un empilement des grains le plus compact possible.

### (II-2-2) Pressage des préformes

La préforme peut être réalisée par pressage uniaxiale ou isostatique. La seconde méthode permet d'obtenir une compaction plus homogène mais la première est plus facile à mettre en oeuvre. Le mélange de poudre est séché pour faciliter le pressage des préformes. L'incorporation, par granulation, d'un liant organique (PEG 6000) favorise la tenue mécanique en cru. Le mélange obtenu contient ainsi :
x % matériau C
100-x % verre Schott 8350^{™}
1% massique de dispersant / (par rapport à la masse du mélange verre céramique)
1% massique de PEG 6000 /(par rapport à la masse du mélange verre céramique)

Les préformes sont pressées uniaxialement à 15 kN pendant 10 secondes.

### (II-2-3) Traitements thermiques de densification de la préforme

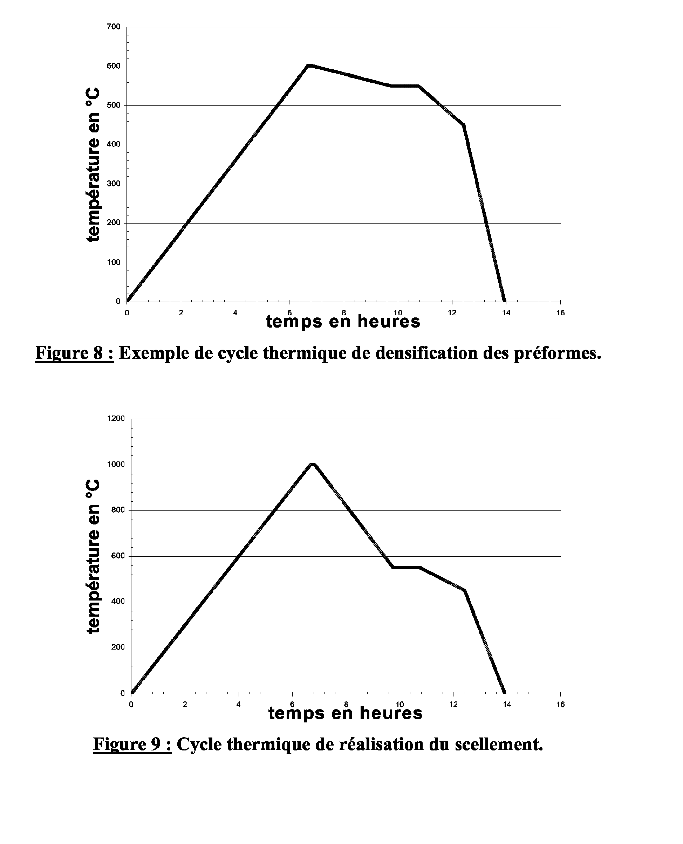

Les préformes subissent un traitement thermique de densification avant l'élaboration du scellement afin de limiter au maximum leur retrait volumique en cours de réalisation. Cette précaution permet d'améliorer l'adhérence entre le matériau de scellement et les pièces à joindre et de s'assurer que tout le volume sera comblé. A l'issu de cette étape, les particules céramiques seront de préférence, encore libres de se mouvoir dans le verre afin de permettre l'étalement de la préforme lors de la réalisation du scellement. Le cycle thermique de densification comporte un palier de déliantage à 400°C permettant l'élimination des produits organiques utilisés lors de la préparation de la poudre et du pressage et un palier de densification à 600°C pendant 10 minutes sous air, avec un contrôle des vitesses de montée et de descente en température. La densification est réalisée au-dessus de la température de ramollissement du verre (figure 8). La descente en température pour le verre Schott 8350^{™} est lente entre 550°C et 450°C afin de permettre une relaxation des contraintes au cours de la solidification du verre, sans engendrer de fissuration dans la préforme. Les préformes sont ensuite caractérisées par observations au MEB de la microstructure afin de vérifier :
- L'homogénéité de la répartition des éléments
- la présence de porosité
- la présence de défauts ponctuels (fissures...)
D'autre part, afin de déterminer la température de traitement thermique du scellement, les préformes sont caractérisées par leur aptitude à l'étalement selon la température et l'atmosphère de traitement. Cette analyse purement qualitative, consiste à placer des pastilles du mélange verre céramique dans un four et de regarder si elles forment une bille après traitement thermique. L'aptitude à l'étalement peut aussi être mesurée de façon quantitative par mesure de l'angle de mouillage, mais cette mesure est très difficile à mettre en oeuvre pour de tels matériaux.

### (II-2-4) Traitement thermique d'élaboration du scellement

L'objectif de ce cycle thermique est de déformer la préforme afin de remplir le volume entre les pièces à joindre, d'assurer la formation des interfaces entre le matériau de scellement et les pièces à joindre et de réaliser les ponts entre les particules céramiques pour conférer les propriétés mécaniques au matériau de scellement. La température de ramollissement du matériau de scellement est contrôlée par les étapes précédentes à savoir les étapes de préparation des poudres (morphologie, granulométrie, ratio verre/céramique) et de préforme (géométrie et dimensionnement de la préforme, prétraitement thermique associé). Si nécessaire une pression peut être appliquée sur le matériau de scellement afin de favoriser son étalement ou de diminuer la température de réalisation de la jonction. Le cycle thermique comporte deux paliers (figure 9). Le premier à une température comprise entre 900 °C et 1200 °C permet l'écoulement de la préforme pour remplir l'espace entre les pièces à sceller et forme les interfaces. La température et la durée de ce palier dépendent des caractéristiques du mélange. Un second palier de recuisson du verre à 550 °C limite les contraintes thermiques qui peuvent se créer lors de la solidification du verre. Ces traitements thermiques peuvent être réalisés sous air ou sous atmosphère contrôlée. L'étalement de la préforme peut être modifiée en fonction de l'atmosphère utilisée.

### (II-3) Par infiltration en voie liquide

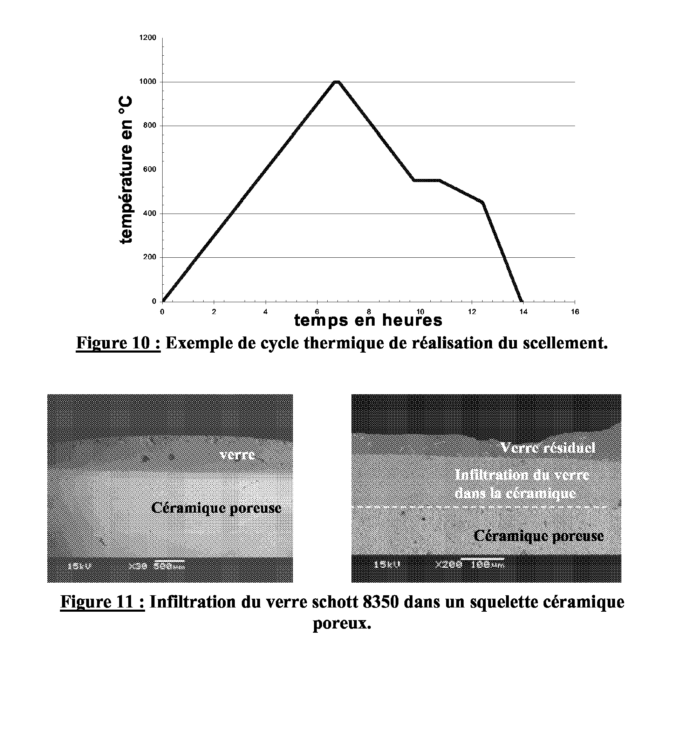

L'élaboration du scellement par infiltration du verre liquide dans une céramique poreuse peut être réalisée en une ou deux étapes. Le procédé en une étape consiste à fabriquer une préforme céramique poreuse, solidaire ou non du tube céramique à sceller. Dans ce cas, les grains céramiques sont déjà liés par un traitement thermique qui peut être celui de frittage du tube si la préforme est solidaire. Une fois les pièces en place, tube, préforme poreuse, bague en alliage réfractaire, le verre peut être apporté, soit à l'aide d'une préforme ou de poudre placée au-dessus de la céramique poreuse, soit en coulant le verre en fusion. La première technique semble plus favorable pour éviter les chocs thermiques sur le tube céramique. Le procédé en deux étapes consiste à mouler la préforme en céramique poreuse dans l'interstice entre le tube et la bague en alliage réfractaire, afin de limiter au maximum le jeu entre ces pièces. Dans ce cas, le traitement thermique de consolidation de la céramique poreuse ne peut pas être identique à celui réalisé pour le frittage du tube. Le verre est ensuite apporté suivant les mêmes techniques que décrit précédemment. L'infiltration du verre peut nécessiter une atmosphère particulière pour améliorer sa mouillabilité et donc son écoulement dans la porosité. Cette atmosphère peut être un gaz ou un vide. La microstructure de la préforme céramique poreuse doit également être parfaitement contrôlée pour assurer l'infiltration du verre dans toute l'épaisseur de la préforme. La préparation des poudres et le choix de la distribution granulométrique sont donc très importants. La figure 10 présente un cycle possible pour la réalisation d'un tel scellement. Deux paliers sont nécessaires, le premier pour assurer l'écoulement du verre et le second pour relâcher les contraintes qui peuvent apparaître lors de la solidification du verre.

Cette dernière technique présente plusieurs avantages par rapport aux précédentes :
- Un contrôle parfait de la microstructure du scellement,
- Réalisation des interfaces avec un fluide moins visqueux que les mélanges céramique/verre, donc un meilleur contact.

Elle nécessite cependant un contrôle précis de la distribution poreuse à infiltrer et l'élaboration d'une préforme poreuse ayant des dimensions très proches de l'espace à combler. La figure 11 montre une section d'une préforme poreuse infiltrée par du verre. La porosité est parfaitement comblée par l'écoulement du verre.

### (III) - Exemples de réalisation

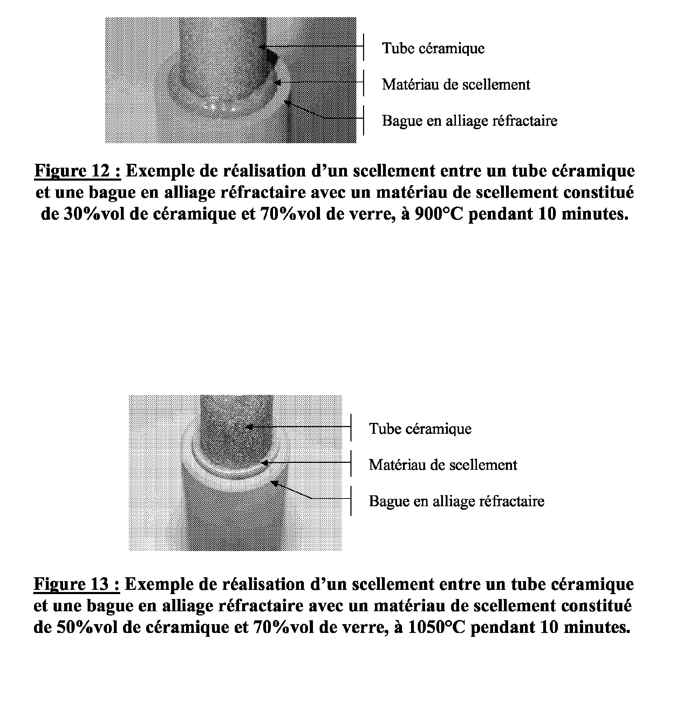

**(III-1)** Les figures 12 et 13 montrent un scellement réalisé avec des préformes de mélanges chargés respectivement à 30 % vol et 50 % vol en matériau céramique C. Les jonctions sont réalisées à 900 °C et 1050 °C, avec dans les deux cas un palier d'une heure à 550 °C pour relâcher les contraintes de solidification du verre. Ces photos montrent la parfaite adaptation des propriétés chimiques et mécaniques des matériaux constituant la liaison. La réfractarité du matériau le plus chargé est supérieure, ce qui permet de l'utiliser à une température supérieure mais nécessite une température plus élevée pour l'élaboration.

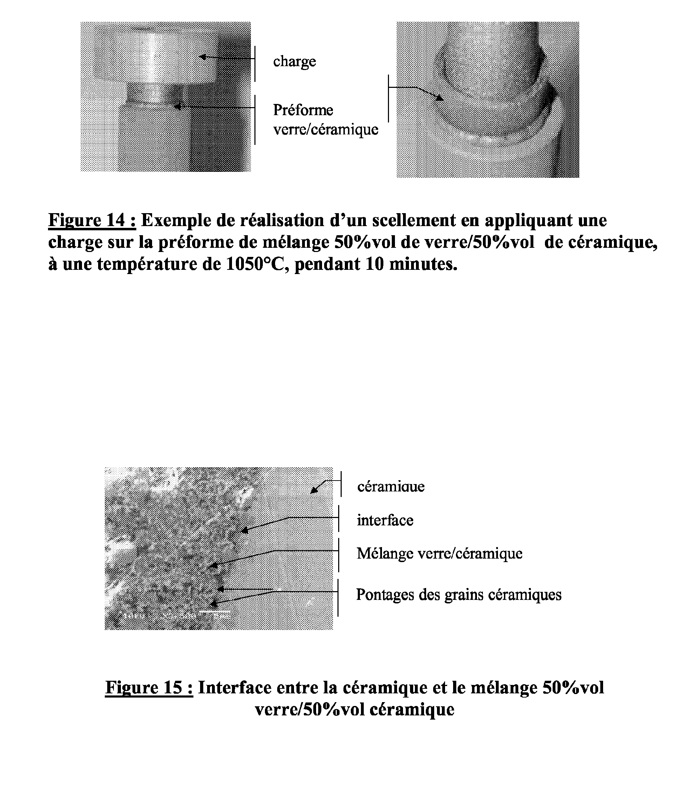

**(III-2)** La figure 14 montre la réalisation d'un scellement à l'aide d'une charge placée sur la préforme. Un anneau de céramique est placé entre la préforme verre/céramique et la charge pour éviter tout collage entre ces deux pièces. L'application d'une charge permet de diminuer légèrement la température d'élaboration et favorise le pontage des particules céramiques.

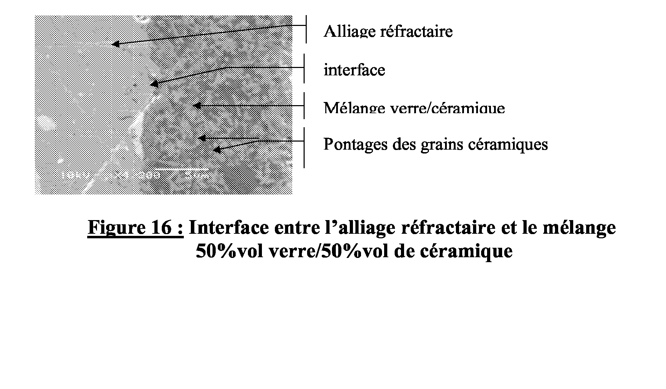

**(III-3)** Les figures 15 et 16 montrent des observations au MEB (microscope électronique à balayage) des interfaces entre l'alliage réfractaire et le matériau de scellement ainsi que la microstructure de ce dernier. Il apparaît que les phases sont réparties de manière homogène et que les grains céramiques sont pontés entre eux. La porosité ainsi formée est totalement comblée par du verre qui assure également l'adhérence aux interfaces avec le tube céramique et l'alliage réfractaire.

## Revendications

1. Procédé de fabrication d'une jonction céramique - métal, entre une pièce en céramique et une pièce métallique ou en alliage métallique, au moyen d'un matériau, dit matériau de scellement, **caractérisé en ce que** ledit matériau de scellement est constitué pour 100 % de sa masse :
- de 10 % massique à 90 % massique, d'un verre ou d'un mélange de verre (V), et
- de 10 % massique à 90 % massique d'au moins un matériau céramique (C), de nature chimique identique ou différente de celle de la pièce céramique à sceller ;
et **en ce que** ledit procédé comprend les étapes successives suivantes :
ou bien
- une étape (a) de préparation d'un mélange (M) de poudres, constitué pour 100 % de sa masse :
- de 10 % massique à 90 % massique d'un verre ou d'un mélange de verre (V), et
- de 10 % massique à 90 % massique d'au moins un matériau céramique (C), à partir d'une poudre de verre (V) et d'une poudre de matériau céramique (C);
- une étape (b) de pressage de la préforme du matériau de scellement, à partir du mélange de poudres (M) préparé à l'étape (a) ;
- une étape (c) de densification de la préforme du matériau de scellement préparée à l'étape (b) ;
- une étape (d) de mise en place des éléments de la jonction céramique complémentaires à la préforme dudit matériau de scellement, densifiée à l'étape (c) ; et
- une étape (e) de traitement thermique de mise en place du scellement préparé à l'étape (d) ;
ou bien
- une étape (b) de pressage d'une préforme d'une poudre d'au moins un matériau céramique (C) ;
- une étape (c) de densification partielle de la préforme préparée à l'étape (b) ;
- une étape (d) de mise en place des éléments de la jonction céramique - métal, complémentaires à la préforme dudit matériau céramique (C) densifiée à l'étape (c) ; et
- une étape (e') de traitement thermique d'infiltration du verre ou du mélange de verres (V) dans la porosité de la préforme mise en place à l'étape (d), pour former ledit matériau de scellement constitutif de ladite jonction céramique - métal.

2. Procédé tel que défini à la revendication 1, **caractérisé en ce qu'**il comprend une étape (aᵥ) de préparation d'une poudre de verre (V) et une étape (a_{c}) de préparation d'une poudre de matériau céramique (C), chacune de ces étapes incluant indépendamment l'une de l'autre, une ou plusieurs étapes de broyage et éventuellement un traitement thermique.

3. Procédé tel que défini à la revendication 1, dans lequel le verre ou le mélange de verre a un coefficient d'expansion thermique compris entre 3 10⁻⁶ et 15 10⁻⁶ /°C entre 20°C et 500°C.

4. Procédé tel que défini à l'une des revendications 1 à 3, dans lequel le matériau céramique (C) est un matériau (A) comportant pour 100 % de son volume :
(i) - au moins 75 % en volumique et au plus 100 % volumique d'un composé (C₁) choisi parmi les oxydes céramiques dopés qui, à la température d'utilisation, sont sous forme d'un réseau cristallin présentant des lacunes en ions oxydes de phase perovskite, de formule (I) :
Mα₁₋ₓ₋ᵤ Mα'ₓ Mα"ᵤ Mβ_{1-y-v} Mβ'_{y} Mβ"ᵥO_{3-w} (I)
dans laquelle :
- Mα représente un atome choisi parmi le scandium, l'yttrium ou dans les familles des lanthanides, des actinides ou des métaux alcalinoterreux ;
- Mα' différent de Mα, représente un atome choisi parmi le scandium, l'yttrium ou dans les familles des lanthanides, des actinides ou des métaux alcalino-terreux ;
- Mα" différent de Mα et de Mα', représente un atome choisi parmi l'aluminium (Al), le gallium (Ga), l'indium (ln), le thallium (TI) ou dans la famille des métaux alcalino-terreux ;
- Mβ représente un atome choisi parmi les métaux de transition ;
- Mβ' différent de Mβ, représente un atome choisi parmi les métaux de transition, l'aluminium (Al), l'indium (ln), le gallium (Ga), le germanium (Ge), l'antimoine (Sb), le bismuth (Bi), l'étain (Sn), le plomb (Pb) ou le titane (Ti) ;
- Mβ" différent de Mβ et de Mβ', représente un atome choisi parmi les métaux de transition, les métaux de famille des alcalino-terreux, l'aluminium (Al), l'indium (ln), le gallium (Ga), le germanium (Ge), l'antimoine (Sb), le bismuth (Bi), l'étain (Sn), le plomb (Pb) ou le titane (Ti) ;
- 0 < x ≤ 0,5 ;
- 0 ≤ u ≤ 0,5 ;
- (x + u) ≤ 0,5 ;
- 0 ≤ y ≤ 0,9 ;
- 0 ≤ v ≤ 0,9 ;
- 0 ≤ (y + v) ≤ 0,9
et w est tel que la structure en cause est électriquement neutre ;
(ii) - éventuellement jusqu'à 25 % en volume d'un composé (C₂), différent du composé (C₁), choisi ou bien parmi les matériaux de type oxyde comme les oxydes de bore, d'aluminium, de gallium, de cérium, de silicium, de titane, de zirconium, de zinc, de magnésium ou de calcium, de préférence parmi l'oxyde de magnésium (MgO), l'oxyde de calcium (CaO), l'oxyde d'aluminium (Al₂O₃), l'oxyde de zirconium (ZrO₂), l'oxyde de titane (TiO₂) ou la cérine (CeO₂) ; les oxydes mixtes de strontium et d'aluminium SrAl₂O₄ ou Sr₃Al₂O₆ ; l'oxyde mixte de baryum et de titane (BaTiO₃) ; l'oxyde mixte de calcium et de titane (CaTiO₃) ; les silicates d'aluminium et/ou de magnésium comme la mullite (2SiO₂.3Al₂O₃), la cordiérite (Mg₂Al₄Si₅O₁₈) ou la phase spinelle MgAl₂O₄ ; l'oxyde mixte de calcium et de titane (CaTiO₃) ; les phosphates de calcium et leurs dérivés, comme l'hydroxy apatite Ca₁₀(PO₄)₆(OH)₂ ou le phosphate tricalcique Ca₃(PO₄)₂ ; ou encore des matériaux de type perovskite comme La_{0,5}Sr_{0,5}Fe_{0,9}Ti_{0,1}O_{3-δ}, La_{0,6}Sr_{0,4}Fe_{0,9}Ga_{0,1}O_{3-δ}, La_{0,5}Sr_{0,5}Fe_{0,9}Ga_{0,1}O_{3-δ} ou La_{0,6}Sr_{0,4}Fe_{0,9}Ti_{0,1}O_{3-δ} ou bien parmi des matériaux de type non oxyde et de préférence parmi les carbures ou les nitrures comme le carbure de silicium (SiC), le nitrure de bore (BN), le nitrure d'aluminium (AIN) ou le nitrure de silicium (Si₃N₄), les « sialon » (SiAlON), ou bien parmi le nickel (Ni), le platine (Pt), le palladium (Pd) ou le rhodium (Rh), les alliages métalliques ou des mélanges de ces différents types de matériaux et,
(iii) - éventuellement jusqu'à 2,5 % en volume d'un composé (C₁₋₂) produit d'au moins une réaction chimique représentée par l'équation :
xF_{C1} + yF_{C2} -----> zF_{C1-2},
équation dans laquelle F_{C1}, F_{C2} et F_{C1-2}, représentent les formules brutes respectives des composés (C₁), (C₂) et (C₁₋₂) et x, y et z représentent des nombres rationnels supérieurs ou égaux à 0 ;

5. Procédé tel que défini à la revendication 4, pour lequel le matériau céramique est un matériau (A) dans lequel la proportion volumique en composé (C₁₋₂), éventuellement présent, tend vers 0.

6. Procédé tel que défini à l'une des revendications 4 ou 5, pour lequel le matériau céramique est un matériau (A) dans lequel la proportion volumique en composé (C₂) éventuellement présent, est supérieure ou égale à 0,1 % et inférieure ou égale à 10 %.

7. Procédé tel que défini à l'une des revendications 4 à 6, pour lequel le matériau céramique est un matériau (A) dans lequel le composé (C₁) est choisi :
ou parmi les composés de formule (Ia) :
La₁₋ₓ₋ᵤMα'ₓMα"ᵤMβ_{1-y-v}Mβ'_{y}Mβ"ᵥO_{3-w} (Ia),
correspondant à la formule (I), dans laquelle Mα représente un atome de lanthane ;
ou parmi les composés de formule (Ib):
Mα₁₋ₓ₋ᵤSrₓMα"ᵤMβ_{1-y-v}Mβ'_{y}Mβ"ᵥO_{3-w} (Ib),
correspondant à la formule (I), dans laquelle Mα' représente un atome de strontium ;
ou bien parmi les composés de formule (Ic) :
Mα₁₋ₓ₋ᵤMα'ₓMα"ᵤFe_{1-y-v}Mβ'_{y}Mβ"ᵥO_{3-w} (Ic),
correspondant à la formule (I), dans laquelle Mβ représente un atome de fer.

8. Procédé tel que défini à la revendication 7, pour lequel le matériau céramique est un matériau (A) dans lequel dans lequel le composé (C₁) est choisi :
ou bien parmi les composés de formule (Id) :
La₁₋ₓ₋ᵤSrₓMα"ᵤFe_{1-y-v}Mβ'_{y}Mβ"ᵥO_{3-w} (Id),
correspondant à la formule (Ia) dans laquelle Mα' représente un atome de strontium et Mβ représente un atome de fer ;
ou bien parmi les composés de formule (Ie) :
La₁₋ₓ₋ᵤMα'ₓAlᵤFe_{1-y-v}Mβ'_{y}Mβ"ᵥO_{3-w} (Ie),
correspondant à la formule (Ia) dans laquelle Mα" représente un atome d'aluminium et Mβ représente un atome de fer ;
ou bien parmi les composés de formule (f) :
La₁₋ₓSrₓ Fe_{1-y} Mβ'_{y}O_{3-w} (If),
correspondant à la formule (Ia) dans laquelle Mα' représente un atome de strontium, Mβ représente un atome de fer et u et v sont égaux à 0 ;
ou bien parmi les composés de formule (Ig) :
La₁₋ᵤCaᵤ Fe_{1-y} Mβ'_{y}O_{3-w} (Ig),
correspondant à la formule (Ia) dans laquelle Mα' représente un atome de calcium, Mβ représente un atome de fer et x et v sont égaux à 0 ;
ou bien parmi les composés de formule (Ih) :
La₁₋ᵤBaᵤ Fe_{1-y} Mβ'_{y}O_{3-w} (Ih),
correspondant à la formule (Ia) dans laquelle Mα' représente un atome de baryum, Mβ représente un atome de fer et x et v sont égaux à 0 ;
ou bien parmi les composés de formule (Ii) :
La₁₋ₓ₋ᵤSrₓCaᵤFe_{1-y-v}Mβ'_{y}Mβ"ᵥO_{3-w} (Ii),
correspondant à la formule (Id) dans laquelle Mα" représente un atome de calcium ;
ou parmi les composés de formule (Ij) :
La₁₋ₓ₋ᵤSrₓBaᵤFe_{1-y-v}Mβ'_{y}Mβ"ᵥO_{3-w} (Ij),
correspondant à la formule (Id) dans laquelle dans laquelle Mα" représente un atome de baryum.

9. Procédé tel que défini à la revendication 8, pour lequel le matériau céramique est un matériau (A) dans lequel dans lequel le composé (C₁) est choisi parmi les composés de formules :
La₁₋ₓSrₓFe_{1-y}GaᵥO_{3-w}, La₁₋ₓSrₓFe_{1-y}Ti_{y}O_{3-w}, La₁₋ₓSrₓFeO_{3-w}, La₁₋ᵤCaᵤFe_{1-y}GaᵥO_{3-w}, La₁₋ᵤCaᵤFe_{1-y}Ti_{y}O_{3-w}, La₁₋ᵤCaᵤFeO_{3-w}, La₁₋ᵤBaᵤFe_{1-y}GaᵥO_{3-w}, La₁₋ᵤBaᵤFe_{1-y}Ti_{y}O_{3-w}, La₁₋ᵤBaᵤFeO_{3-w}, La₁₋ₓ₋ᵤSrₓAlᵤFe_{1-y}Ti_{y}O_{3-w}, La₁₋ₓ₋ᵤSrₓCaᵤFe_{1-y}Ti_{y}O_{3-w}, La₁₋ₓ₋ᵤSrₓBaᵤFe_{1-y}Ti_{y}O_{3-w}, La₁₋ₓ₋ᵤSrₓAlᵤFe_{1-y}GaᵥO_{3-w}, La₁₋ₓ₋ᵤSrₓCaᵤFe_{1-y}GaᵥO_{3-w}, La₁₋ₓ₋ᵤSrₓBaᵤFe_{1-y}GaᵥO_{3-w}, La₁₋ₓSrₓFe_{1-y}Ti_{y}O_{3-w}, La₁₋ᵤCaᵤFe_{1-y}Ti_{y}O_{3-w}, La₁₋ᵤBaᵤFe_{1-y}Ti_{y}O_{3-w}, La₁₋ₓSrₓFe_{1-y}GaᵥO_{3-w}, La₁₋ᵤCaᵤFe_{1-y}GaᵥO_{3-w}, La₁₋ᵤBaᵤFe_{1-y}GaᵥO_{3-w}, La₁₋ᵤBaᵤFeO_{3-w}, La₁₋ᵤCaᵤFeO_{3-w} ou La₁₋ₓSrₓFeO_{3-w},
et plus particulièrement parmi ceux de formules :
La_{0,6}Sr_{0,4}Fe_{0,9}Ga_{0,1}O_{3-w}, La_{0,9}Sr_{0,1}Fe_{0,9}Ga_{0,1}O_{3-w}, La_{0,5}Sr_{0,5}Fe_{0,9}Ti_{0,1}O_{3-w}, La_{0,9}Sr_{0,1}Fe_{0,9}Ti_{0,1}O_{3-w}, La_{0,6}Sr_{0,4}Fe_{0,2}Co_{0,8}O_{3-w} ou La_{0,9}Sr_{0,1}Fe_{0,2}Co_{0,8}O_{3-w}.

10. Procédé tel que défini à l'une des revendications 4 à 9, pour lequel le matériau céramique est un matériau (A) dans lequel dans lequel le composé (C₂) est choisi parmi l'oxyde de magnésium (MgO), l'oxyde de calcium (CaO), l'oxyde d'aluminium (Al₂O₃), l'oxyde de zirconium (ZrO₂), l'oxyde de titane (TiO₂), les oxydes mixtes de strontium et d'aluminium SrAl₂O₄ ou Sr₃Al₂O₆, l'oxyde mixte de baryum et de titane (BaTiO₃), l'oxyde mixte de calcium et de titane (CaTiO₃), La_{0,5}Sr_{0,5}Fe_{0,9}Ti_{0,1}O_{3-δ} ou La_{0,6}Sr_{0,4}Fe_{0,9}Ga_{0,1}O_{3-δ}.

11. Composition, **caractérisée en ce qu'**elle est constituée pour 100 % de sa masse :
- de 10 % massique à 90 % massique, d'un verre ou d'un mélange de verre (V), et
- de 10 % massique à 90 % massique d'au moins un matériau un matériau (A) comportant pour 100 % de son volume :
(i) - au moins 75 % en volumique et au plus 100 % volumique d'un composé (C₁) choisi parmi les oxydes céramiques dopés qui, à la température d'utilisation, sont sous forme d'un réseau cristallin présentant des lacunes en ions oxydes de phase perovskite, de formule (I) :
Mα₁₋ₓ₋ᵤ Mα'ₓ Mα"ᵤ Mβ_{1-y-v} Mβ'_{y} Mβ"ᵥO_{3-w} (I)
dans laquelle :
- Mα représente un atome choisi parmi le scandium, l'yttrium ou dans les familles des lanthanides, des actinides ou des métaux alcalinoterreux ;
- Mα' différent de Mα, représente un atome choisi parmi le scandium, l'yttrium ou dans les familles des lanthanides, des actinides ou des métaux alcalino-terreux ;
- Mα" différent de Mα et de Mα', représente un atome choisi parmi l'aluminium (Al), le gallium (Ga), l'indium (In), le thallium (TI) ou dans la famille des métaux alcalino-terreux ;
- Mβ représente un atome choisi parmi les métaux de transition ;
- Mβ' différent de Mβ, représente un atome choisi parmi les métaux de transition, l'aluminium (Al), l'indium (In), le gallium (Ga), le germanium (Ge), l'antimoine (Sb), le bismuth (Bi), l'étain (Sn), le plomb (Pb) ou le titane (Ti) ;
- Mβ" différent de Mβ et de Mβ', représente un atome choisi parmi les métaux de transition, les métaux de famille des alcalino-terreux, l'aluminium (Al), l'indium (In), le gallium (Ga), le germanium (Ge), l'antimoine (Sb), le bismuth (Bi), l'étain (Sn), le plomb (Pb) ou le titane (Ti);
- 0 < x ≤ 0,5;
- 0 ≤ u ≤ 0,5;
- (x + u) ≤ 0,5;
- 0 ≤ y ≤ 0,9;
- 0 ≤ v ≤ 0,9;
- 0 ≤ (y + v) ≤ 0,9
et w est tel que la structure en cause est électriquement neutre ;
(ii) - éventuellement jusqu'à 25 % en volume d'un composé (C₂), différent du composé (C₁), choisi ou bien parmi les matériaux de type oxyde comme les oxydes de bore, d'aluminium, de gallium, de cérium, de silicium, de titane, de zirconium, de zinc, de magnésium ou de calcium, de préférence parmi l'oxyde de magnésium (MgO), l'oxyde de calcium (CaO), l'oxyde d'aluminium (Al₂O₃), l'oxyde de zirconium (ZrO₂), l'oxyde de titane (TiO₂) ou la cérine (CeO₂); les oxydes mixtes de strontium et d'aluminium SrAl₂O₄ ou Sr₃Al₂O₆ ; l'oxyde mixte de baryum et de titane (BaTiO₃) ; l'oxyde mixte de calcium et de titane (CaTiO₃) ; les silicates d'aluminium et/ou de magnésium comme la mullite (2SiO₂.3Al₂O₃), la cordiérite (Mg₂Al₄Si₅O₁₈) ou la phase spinelle MgAl₂O₄ ; l'oxyde mixte de calcium et de titane (CaTiO₃) ; les phosphates de calcium et leurs dérivés, comme l'hydroxy apatite Ca₁₀(PO₄)₆(OH)₂ ou le phosphate tricalcique Ca₃(PO₄)₂ ; ou encore des matériaux de type perovskite comme La_{0,5}Sr₀,₅Fe_{0,9}Ti_{0,1}O_{3-δ}, La_{0,6}Sr_{0,4}Fe_{0,9}Ga_{0,1}O_{3-δ}, La_{0,5}Sr_{0,5}Fe_{0,9}Ga_{0,1}O_{3-δ} ou La_{0,6}Sr_{0,4}Fe_{0,9}Ti_{0,1}O_{3-δ} ou bien parmi des matériaux de type non oxyde et de préférence parmi les carbures ou les nitrures comme le carbure de silicium (SiC), le nitrure de bore (BN), le nitrure d'aluminium (AIN) ou le nitrure de silicium (Si₃N₄), les « sialon » (SiAION), ou bien parmi le nickel (Ni), le platine (Pt), le palladium (Pd) ou le rhodium (Rh), les alliages métalliques ou des mélanges de ces différents types de matériaux et,
(iii) - éventuellement jusqu'à 2,5 % en volume d'un composé (C₁₋₂) produit d'au moins une réaction chimique représentée par l'équation :
xF_{C1} + yF_{C2} ------> zF_{C1-2},
équation dans laquelle F_{C1}, F_{C2} et F_{C1-2}, représentent les formules brutes respectives des composés (C₁), (C₂) et (C₁₋₂) et x, y et z représentent des nombres rationnels supérieurs ou égaux à 0.

12. Composition telle que définie à la revendication 11, pour laquelle la proportion volumique en composé (C₁-₂), éventuellement présent dans le matériau (A), tend vers 0.

13. Composition telle que définie à l'une des revendications 11 ou 12, pour laquelle la proportion volumique en composé (C₂) éventuellement présent dans le matériau (A), est supérieure ou égale à 0,1 % et inférieure ou égale à 10 %.

14. Composition telle que définie à l'une des revendications 11 à 13, pour laquelle le composé (C₁) présent dans le matériau (A) est choisi:
ou bien parmi les composés de formule (Ia):
La₁₋ₓ₋ᵤMα'ₓMα"ᵤMβ_{1-y-v}Mβ'_{y}Mβ"ᵥO_{3-w} (Ia),
correspondant à la formule (I), dans laquelle Mα représente un atome de lanthane ;
ou bien parmi les composés de formule (Ib) :
Mα₁₋ₓ₋ᵤSrₓMα"ᵤMβ_{1-y-v}Mβ'_{y}Mβ"ᵥO_{3-w} (Ib),
correspondant à la formule (I), dans laquelle Mα' représente un atome de strontium ;
ou bien parmi les composés de formule (Ic) :
Mα₁₋ₓ₋ᵤMα'ₓMα"ᵤFe_{1-y-v}Mβ'_{y}Mβ"ᵥO_{3-w} (Ic),
correspondant à la formule (I), dans laquelle Mβ représente un atome de fer.

15. Composition telle que définie à la revendication 14, pour laquelle le composé (C₁) présent dans le matériau (A) est choisi :
ou bien parmi les composés de formule (Id) :
La₁₋ₓ₋ᵤSrₓMα"ᵤFe_{1-y-v}Mβ'_{y}Mβ"ᵥO_{3-w} (Id),
correspondant à la formule (Ia) dans laquelle Mα' représente un atome de strontium et Mβ représente un atome de fer ;
ou bien parmi les composés de formule (Ie) :
La₁₋ₓ₋ᵤMα'ₓAlᵤFe_{1-y-v}Mβ'_{y}Mβ"ᵥO_{3-w} (Ie),
correspondant à la formule (Ia) dans laquelle Mα" représente un atome d'aluminium et Mβ représente un atome de fer ;
ou bien parmi les composés de formule (If) :
La₁₋ₓSrₓ Fe_{1-y} Mβ'_{y}O_{3-w} (If),
correspondant à la formule (Ia) dans laquelle Mα' représente un atome de strontium, Mβ représente un atome de fer et u et v sont égaux à 0 ;
ou bien parmi les composés de formule (Ig) :
La₁₋ᵤCaᵤ Fe_{1-y} Mβ'_{y}O_{3-w} (Ig),
correspondant à la formule (Ia) dans laquelle Mα' représente un atome de calcium, Mβ représente un atome de fer et x et v sont égaux à 0 ;
ou bien parmi les composés de formule (Ih) :
La₁₋ᵤBaᵤ Fe_{1-y} Mβ'_{y}O_{3-w} (Ih),
correspondant à la formule (Ia) dans laquelle Mα' représente un atome de baryum, Mβ représente un atome de fer et x et v sont égaux à 0 ;
ou bien parmi les composés de formule (Ii) :
La₁₋ₓ₋ᵤSrₓCaᵤFe_{1-y-v}Mβ'_{y}Mβ"ᵥO_{3-w} (Ii),
correspondant à la formule (Id) dans laquelle Mα" représente un atome de calcium ;
ou parmi les composés de formule (Ij) :
La₁₋ₓ₋ᵤSrₓBaᵤFe_{1-y-v}Mβ'_{y}Mβ"ᵥO_{3-w} (Ij),
correspondant à la formule (Id) dans laquelle dans laquelle Mα" représente un atome de baryum.

16. Composition telle que définie à la revendication 15, pour laquelle le composé (C₁) présent dans le matériau (A) est choisi parmi les composés de formules :
La₁₋ₓSrₓFe_{1-y}GaᵥO_{3-w}, La₁₋ₓSrₓFe_{1-y}TiyO_{3-w}, La₁₋ₓSrₓFeO_{3-w}, La₁₋ᵤCaᵤFe_{1-y}GaᵥO_{3-w}, La₁₋ᵤCaᵤFe_{1-y}Ti_{y}O_{3-w}, La₁₋ᵤCaᵤFeO_{3-w}, La₁₋ᵤBaᵤFe_{1-y}GaᵥO_{3-w}, La₁₋ᵤBaᵤFe_{1-y}Ti_{y}O_{3-w}, La₁₋ᵤBaᵤFeO_{3-w}, La₁₋ₓ₋ᵤSrₓAlᵤFe_{1-y}Ti_{y}O_{3-w}, La₁₋ₓ₋ᵤSrₓCaᵤFe_{1-y}Ti_{y}O_{3-w}, La₁₋ₓ₋ᵤSrₓBaᵤFe_{1-y}Ti_{y}O_{3-w}, La₁₋ₓ₋ᵤSrₓAlᵤFe_{1-y}GaᵥO_{3-w}, La₁₋ₓ₋ᵤSrₓCauFe_{1-y}GaᵥO_{3-w}, La₁₋ₓ₋ᵤSrₓBaᵤFe_{1-y}GaᵥO_{3-w}, La₁₋ₓSrₓFe_{1-y}TiyO_{3-w}, La₁₋ᵤCaᵤFe_{1-y}TiyO_{3-w}, La₁₋ᵤBaᵤFe_{1-y}TiyO_{3-w}, La₁₋ₓSrₓFe_{1-y}GaᵥO_{3-w}, La₁₋ᵤCaᵤFe_{1-y}GaᵥO_{3-w}, La₁₋ᵤBaᵤFe_{1-y}GaᵥO_{3-w}, La₁₋ᵤBaᵤFeO_{3-w}, La₁₋ᵤCaᵤFeO_{3-w} ou La₁₋ₓSrₓFeO_{3-w},
et plus particulièrement parmi ceux de formules :
La_{0,6}Sr_{0,4}Fe_{0,9}Ga_{0,1}O_{3-w}, La_{0,9}Sr_{0,1}Fe_{0,9}Ga_{0,1}O_{3-w}, La_{0,5}Sr_{0,5}Fe_{0,9}Ti_{0,1}O_{3-w}, La_{0,9}Sr_{0,1}Fe_{0,9}Ti_{0,1}O_{3-w}, La_{0,6}Sr_{0,4}Fe_{0,2}Co_{0,8}O_{3-w} ou La_{0,9}Sr_{0,1}Fe_{0,2}Co_{0,8}O_{3-w}.

17. Composition telle que définie à l'une des revendications 11 à 16, pour laquelle le composé (C₂) présent dans le matériau (A) est choisi parmi l'oxyde de magnésium (MgO), l'oxyde de calcium (CaO), l'oxyde d'aluminium (Al₂O₃), l'oxyde de zirconium (ZrO₂), l'oxyde de titane (TiO₂), les oxydes mixtes de strontium et d'aluminium SrAl₂O₄ ou Sr₃Al₂O₆, l'oxyde mixte de baryum et de titane (BaTiO₃), l'oxyde mixte de calcium et de titane (CaTiO₃), La_{0,5}Sr_{0,5}Fe_{0,9}Ti_{0,1}O_{3-δ} ou La_{0,6}Sr_{0,4}Fe_{0,9}Ga_{0,1}O_{3-δ}.

18. Utilisation de la composition telle que définie à l'une des revendications 1 à 17, comme matériau de scellement, d'une jonction céramique - métal, entre une pièce en céramique et une pièce métallique ou en alliage métallique.

19. Ensemble (5) de jonction céramique - métal, ledit ensemble (5) comportant :
1) au moins une pièce (3) en céramique se présentant sous la forme d'un tube creux et sensiblement cylindrique d'axe (X'X), fermé à l'une de ses extrémités (3b) et ouvert à l'autre extrémité (3a), définissant une zone intérieure appelée zone céramique (ZC) et une zone extérieure appelée zone métallique (ZM), lesdites zones céramique (ZC) et métallique (ZM) ne communiquant pas entre elles et étant séparées au moins partiellement par la pièce (3) en céramique, au moins partiellement gainée par
2) au moins une douille (2) en métal ou alliage métallique comportant une partie (2b) ci-après nommée « zone de jonction » sensiblement cylindrique et creuse d'axe (X'X) enveloppant au moins partiellement ledit tube (3), un espace (4) sensiblement annulaire d'axe (X'X) étant ménagé entre ledit tube (3) et ladite zone de jonction (2b), **caractérisé en ce que** l'étanchéité entre ledit tube (3) et ladite douille (2) est assurée par au moins un élément (1) de jonction céramique - métal qui est en contact avec le tube (3) et avec ladite zone de jonction (2b) de la douille (2), l'élément (1) de jonction étant au moins partiellement présent dans ledit espace (4) annulaire en en occupant un sous espace (4a) et se présentant de préférence sous la forme d'une pièce sensiblement annulaire (1),
**en ce que** l'élément (1) de jonction comprend au moins un matériau de scellement constitué d'une composition telle que définie à l'une des revendications 11 à 17 ;
**en ce que** ledit ensemble (5) de jonction est tel que ladite zone de jonction (2b) a une faible dimension (I), selon tout axe (Y'Y) traversant ladite zone de jonction (2b) et perpendiculaire à l'axe (X'X).

20. Ensemble tel que défini à la revendication 19, dans lequel le rapport de dimensions selon l'axe (X'X) de la zone de jonction (2b) au sous-espace (4a) est au moins égal à 2/1, et est de préférence dans la fourchette de 2/1 à 100/1.

21. Ensemble tel que défini à l'une des revendications 19 ou 20, pour lequel ladite faible dimension (I) est d'environ entre 20 µm à 500 µm, de préférence d'environ 50 µm à 400 µm, de façon encore plus préférée d'environ 200 µm à 300µm.

22. Ensemble tel que défini à l'une des revendications 19 à 21, dans lequel la douille (2) comporte au moins un épaulement (2c) de support du tube (3) et/ou au moins un épaulement (2a) de calage du tube (3).
